# EUROPÄISCHE PATENTANMELDUNG

(11) **EP 1 077 514 A2**
(43) Veröffentlichungstag der Anmeldung: **21.02.2001**
(21) Anmeldenummer: 00116852.5
(22) Anmeldetag: 04.08.2000
(51) Int. Cl.: H01R 13/719

(54) **Mehrfachfilter**

(30) Priorität: 19.08.1999 DE 29914584 U; 19.08.1999 DE 19939379; 04.12.1999 DE 19958484
(71) Anmelder: FILTEC FILTERTECHNOLOGIE FUR DIE ELEKTRONIKINDUSTRIE GmbH, D-59557 Lippstadt (DE)
(72) Erfinder: Meppelink, Jan, Prof. Dr.-Ing., 59494 Soest (DE); Kühle, Jörg, 59514 Welver-Borgeln (DE); Wallmeier, frank, 59558 Lippstadt (DE); Dingenotto, Meinolf, 33758 Schloss Holte (DE)
(74) Vertreter: Strauss, H.-J., Dr.

(57) **Zusammenfassung**

Um ein Steckverbinder-Mehrfachfilter mit zumindest einem Kondensator mit Signal- und Masseelektrode, verbunden mit der zugeordneten Signal- bzw-Masseleitung so weiterzubilden, dass es sowohl mit diskreten Bauelementen als auch in Dick- oder in Dünnschichttechnik einfach herstellbar und auch auch im Frequenzbereich größer 10 GHz nutzbar ist, ist ein Block von Kondensatorsäulen (11; 21; 31; 41; 51; 61; 71) vorgesehen, die im Block (10) zusammengefasst oder freistehend auf der Blockbasis (20.1) angeordnet sind. Das Blockisoliermaterial bildet das Kondensatordielektrikum (14, 24, 34, 44, 54, 64, 74) mit einer DK bei 10³ bis 10⁴. Jede Kondensatorsäule enthält einen von Signalleiter (18; 28; 38; 48; 58; 68; 78) und Masseleiter (19; 29; 39; 49; 59; 69) gebildeten Kondensator, dessen Signalelektrode entweder vom Signalleiter selbst oder von mit ihm verbundenen Schichten und dessen Masseelektrode (13, 23, 33, 43, 53, 63, 73) auf der Außenwandung der Kondensatorsäule, diese zumindest teilweise überdeckend gebildet sind.

## Beschreibung

Die Erfindung betrifft ein Mehrfachfilter nach dem Oberbegriff des Hauptanspruchs; sie betrifft weiter die Verwendung eines solchen Mehrfachfilters als Steckverbinder und schließlich ein Verfahren zur Herstellung solcher Steckverbinder.

Solche Mehrfachfilter sind an und für sich bekannt: In vielen Fällen werden Planarfilter eingesetzt, bei denen die Kondensator-Elektroden in einer Ebene rechtwinklig zu der Ausrichtung der Signalleiter angeordnet sind; dadurch lassen sich bei dem beschränkten Platz auf den Trägern solcher Planarfilter nur beschränkte Kapazitäten unterbringen. Für größere Kapazitäten wurden Filter entwickelt, die die Signalleiter in Art von Rohrkondensatoren umgeben; dadurch sind größere Elektrodenflächen möglich, und somit größere Kapazitäten zu erreichen, die sich durch Einsatz von Dielektrika mit Dielektrizätskonstanten - im Folgenden immer DK - der Größenordnung 10³ bis 10⁴ noch vergrößern lassen, beispielsweise aus US-PS 4 494 092, FR 2 422 268 oder DE-OS 26 00 320 oder DE-OS 28 00 745.

Hier setzt die Erfindung ein, mit der ein Mehrfachfilter für Steckverbinder vorgeschlagen wird, das einfach und wirtschaftlich herstellbar ist, und das in Weiterbildung im Frequenzbereich bis über 10 GHz nutzbar sein soll, wobei dieses Mehrfachfilter sowohl mit diskreten Bauelementen als auch in Dick- oder in Dünnschichttechnik bestückbar und betriebssicher einsetzbar sein soll.

Diese Aufgabe wird erfindungsgemäß durch die im Kennzeichen des Hauptanspruchs genannten Merkmale gelöst; vorteilhafte Weiterbildungen und bevorzugte Ausführungsformen beschreiben die Unteransprüche.

Bei Steckverbindern sind die zu verbindenden Kontakte (im Folgenden als Signalleiter bezeichnet) in Reihen angeordnet; ein in den Steckverbinder einbaubares Mehrfachfilter muss demnach eine diesem Kontaktbild entsprechende Ausbildung aufweisen. Das Mehrfachfilter nach der Erfindung ist bei einer Ausführungsform von in Reihen und Spalten angeordneten Kondensatoren gebildet, die zu einem Block zusammengefügt sind; jeder weist einen Kanal zum Durchführen des zugeordneten Signalleiter auf, sowie einen Masseleiter zum Anschließen an eine Masse, ggf. über die Masseleiter der Kondensatoren zusammenführende Brückenleiter.

Jeder der Kondensatoren ist als Kondensatorsäule mit Zentralkanal zum Durchführen der zugeordneten Signalleitung ausgebildet, wobei das dielektrische Material den Block bildet, der die einzelnen Kondensatoren enthält. Metallbeläge auf den Innenseiten der Zentralkanäle, die mit den durchgeführten Signalleitungen elektrisch verbunden sind, bilden Signalelektroden der Kondensatoren. Metallbeläge auf den Außenseiten der Kondensatorsäulen, die Masseelektroden. Bei Verwendung von spannungsfestem Material mit niedriger DK lassen sich so hinreichend hohe Kapazitäten erreichen, die noch eine wirksame Filterung erlauben, die aber einen geringen Temperatur- und Frequenzgang der Kapazität aufweisen. Wird dagegen ein Material mit hoher DK benutzt, können so bei den einzelnen Kondensatoren außergewöhnlich hohe Kapazitätswerte erreicht werden. Von solchen Kondensatorsäulen sind eine Anzahl entsprechend dem Lochbild des Steckverbinders zu einem Block vereinigt, so dass dessen Steckerbild dem eines korrespondierende Steckverbinders entspricht. Dabei können unterschiedliche Kondensatorsäulen zusammengefügt werden, es können auch unterschiedliche Leiter-Verbinder eingesetzt werden, etwa neben den Signalkontakten auch KOAX-Kontakte und/oder Starkstromkontakte. Zur Herstellung wird der dielektrische Körper vorteilhaft im Spritzgießverfahren oder in einem dem Schleuderguss ähnlichen Verfahren aus einer entsprechenden Keramik-Schlempe hergestellt, wobei insbesondere bei dem den Schleuderguss ähnelnden Verfahren feine Strukturen hergestellt werden können.

In der ersten Ausführungsform bilden die zusammengefügten Kondensatorsäulen einen quaderförmigen Block. Jede der Kondensatorsäulen ist mit einem Zentral-kanal zum Durchführen des Signalleiters versehen, wobei die Innenwandung des Zentralkanals zur Bildung der Signalelektrode metallisiert ist. Im Abstand davon ist diese Signalelektrode von einem metallisierten Belag umgeben der die Masseelektrode bildet, wobei abstandshaltend die dielektrische Schicht zwischen beiden angeordnet ist. Die Masseelektroden der einzelnen Kondensatoren sind über eine oder mehrere Brückenelektrode/-den herausgeführt, vorteilhaft, zu einer Metallisierung der Stirnfläche, und mit der allgemeinen Masse verbunden. Die total metallisierte Stirnfläche oder - bei in Reihen angeordneten Filtern - auch auf der Stirnseite verlaufenden metallisierten Streifen bilden den Masseanschluss (wobei es sich von selbst versteht, dass die Bereiche zwischen den Masseelektroden und den Signalelektroden von einer Metallisierung ausgenommen sind). Diese Ausführungsform bildet einen kompakten Block zusammengefügter Kondensatoren, der als solcher unmittelbar in eine Schaltung einsetzbar ist. Solche Strukturen lassen sich von extrudierten Hohlröhren ausgehend herstellen, durch deren Zentralkanal der Signalleiter geführt und deren Außenseite metallisiert wird. Diese werden - entprechend der gewünschten Anzahl und der Anordnung - zu einem Block zusammengefügt und so gesintert, ggf unter Zwischenbringung eines Dielektrikums niedriger DK. Der gesinterte Block wird auf Maß bearbeitet und kontaktiert, die einzelnen Signalleiter werden in die Zentralkanäle eingesetzt, und bilden entweder selbst am Dielektrikum anliegend die Signalelektrode oder sind im Zentralkanal mit die Beläge der Signalelektrode bildenden Innen-Metallisierungen der Zentralkanäle verbunden. Eine Anpassung der Kapazität kann hier durch eine Ablängung der Kondensatorsäulen oder deren metallischer Außenbeläge erfolgen; alternativ lassen sich auch die Innenbeläge ablängen, dann allerdings ist ein Luftspalt zwischen dem Dielektrikum und dem Signalleiter vorzusehen, der diese Art der Kapazitätsanpassung ermöglicht. Werden die Signalelektrode und/oder die Masseelektrode gegenüber der Stirnfläche abgesetzt, kann die Spannungsfestigkeit weiter erhöht werden.

Bei dieser ersten Ausführungsform kann der Block des Mehrfachfilters so kompakt ausgebildet werden, dass der Zentralkanal mit dem Signalleiter und der über den Masseleiter mit der Gerätemasse verbundenen Masseableiter zu Leiterbahnen werden, die auf dielektrische Schichten aufgebracht sind. Die metallisierten Stirnseiten der Basis (oder deren metallisierte Oberflächenbereiche) stehen dann als Masseanschluss zur Verfügung.

Bei einer zweiten Ausführungsform sind die einzelnen Kondensatoren durch sich kreuzende Nuten im dielektrischen Block voneinander inselartig getrennt, so dass eine in einem Trog angeordnete Säulenstruktur entsteht, bei der jede der Säulen eine Kondensatorsäule ist, deren Fuß im Quader verankert ist. Bereits durch diese Luftspalte wird dabei eine wesentliche Entkopplung der einzelnen Kondensatoren gegeneinander erreicht. Jede Kondensatorsäule enthält einen Zentralkanal für den Signalleiter, der die Signalelektrode bildet oder der mit der zur Bildung der Signalelektrode metallisierten Kanalinnenwand verbunden ist, und einen auf der Außenseite vorgesehenen Außenbelag, der die Masseelektrode des zugeordneten Kondensators bildet, die über im Grund der Nuten angeordneten Brückenelektrode/-den - wie oben beschrieben - mit den Anschlussstellen verbunden ist. Dabei sind vorteilhaft die Innenseiten der seitlichen Wände des Troges metallisiert und die Brückenelektrode mit der/den auf einer der Außenseite des Blockes vorgesehenen Masseanschluss-Stelle/-len über diese Metallisierung geführt.

Bei dieser zweiten Ausführungsform kann der Block des Mehrfachkondensators auch so ausgebildet sein, dass Wandbereiche, die die auf der Basis aufstehenden Kondensatorsäulen umgeben, nicht bis zur Säulenhöhe geführt sind und bündig mit diesen abschließen. Vielmehr können diese Wandbereiche in ihrer Höhe niedriger sein als die Kondensatorsäulen, oder sie können ganz entfallen und die Kondensatorsäulen stehen frei auf der Basis auf. Die metallisierten Stirnseiten der Basis (oder deren metallisierte Oberflächenbereiche) stehen dann als Masseanschluss zur Verfügung.

Der Kapazitätsabgleich läßt sich entweder durch Veränderung der Säulenhöhe oder durch Abgleich der Fläche des metallisierten Belags von Signal- oder Masseelektrode erreichen. Dieser Flächenabgleich wird vorteilhaft über Laser-Abtrag mit einer Laserabgleichsvorrichtung eingestellt, so dass auch bei dieser Ausbildung die einzelnen Kapazitäten jedes der Kondensatoren auf einen gewünschten, engtolerierten Wert einstellbar sind. Vorteilhaft werden alle vier Seiten der Säulen metallisiert, was die Einzelkondensatoren gegeneinander abschirmt, vollständig entkoppelt und unerwünschtes Übersprechen unterbindet sowie wegen der Schirmung gegen elektrische Felder die Impulssicherheit etwa gegen EMP erhöht. Zur Metallisierung wird in an sich bekannter Weise eine druckfähige Palladium-Silber-Suspension eingesetzt, die beim Sintern des durch Spritz- oder Schleuderguss hergestellten Greenkörpers als metallischer Belag auf der Oberfläche verbleibt, der zum Herstellen der elektrischen Verbindung verlötet werden kann.

Alternativ wird die Metallisierung insbesondere der Außenbeläge nach dem Sintern aufgetragen, etwa durch Aufdruck mit nachfolgendem Erhitzen, mittels Galvanotechnik oder mittels einer metallischen Beschichtung im Vakuum, mittels Plasmas o. dgl. Vorteilhaft werden die Kondensatorsäulen nicht allseitig metallisiert, oder die Masseelektroden zur Erhöhung der Spannungsfestigkeit gegenüber der Stirnseite abgesetzt. Metallstreifen, eingelegt in die Nuten zwischen den Säulen erlauben eine verbesserte Abschirmung, obwohl die Koppelkapazitäten in diesem Kondensatorsystem an sich schon niedrig sind. Übersprech-Phänomene oder Störsignal-Einstreuungen werden unterdrückt. Zur Verbesserung der mechanischen Stabilität ist es vorteilhaft, den so unterteilten Keramikblock mit einem Kunststoff niedriger DK auszugießen. Dadurch werden die sich kreuzenden Nuten aufgefüllt, und die elektrischen Verhältnisse infolge der niedrigen DK bleiben im wesentlichen ungeändert.

Solche Filterkörper mit zumindest einigen Signalleiter zugeordneten Kondensatoren, aufgebaut insbesondere mit Dielektrika hoher DK oberhalb von 10³ haben jedoch wegen unvermeidbarer Laufzeiteffekte Einsatzgrenzen, die dort liegen. wo solche Laufzeiteffekte ein gleichzeitiges Aufladen des Kondensators unterbinden. Dies liegt daran, dass durch die Erstreckung der KondensatorElektroden in Richtung der Signalausbreitung unmittelbar an einem Medium hoher DK im Bereich 10³ bis 10⁴ verlaufen, die Ausbreitungsgeschwindigkeit des Signals auf dem Leiter wird verringert und das Auf- bzw. Entladen der Kondensatoren kann dabei den Schwingungen nicht folgen.

Somit stellt sich das weitergehende Problem, solche laufzeitbedingte Begrenzung in höhere und sehr hohe Frequenzbereiche zu verlagern, um die Anwendbarkeit im Frequenzbereich darunter zu erweitern. Uni dieses zu erreichen, wird in Weiterführung der Erfindung vorgeschlagen, dass jeder der Signalleiter oder der/die Masseleiter im Abstand von den Belägen verläuft, so dass die hohe DK des Dielektrikums des Kondensators keinen Einfluss auf diese Leiter mehr ausüben kann; dazu reichen im allgemeinen relativ geringe Spalte mit niedriger DK. Somit verlaufen Signal- oder Masseleiter nicht auf dem Dielektrikum der Kondensatoren mit hoher DK, sondern in einem Medium mit einer DK im Bereich von 10⁰. Die Signalfortpflanzungsgeschwindigkeit entspricht der in Luft und kann so als "unverzögert" angesehen werden, wozu im allgemeinen relativ geringe Spaltweiten mit niedriger DK ausreichen.

Dazu wird die mit dem Signalleiter verbundene Signalelektrode des Kondensators oder die mit dem Masseleiter verbundene Masseelektrode des Kondensators in Teilelektroden unterteilt, die elektrisch einzeln mit dem Signalleiter oder dem Masseleiter verbunden und von dem Dielektrikum hoher DK beabstandet sind. Da diese vom Dielektrikum mit einer DK der Größenordnung 10³ bis 10⁴ beabstandet sind, ist die Signalfortpflanzungsgeschwindigkeit nicht verringert, bei Frequenzen von 1 GHz und mehr kann ein ungestörtes Auf- bzw. Entladen der Kondensatoren stattfinden. Um die Signalelektrode in Teilelektroden zu unterteilen, ist es hinreichend, wenn der Durchmesser des Signalleiters kleiner ist, als der Durchmesser des Zentralkanals und die Signalelektroden als auf die Wandung des Zentralkanals aufgebrachte Ringe ausgebildet sind, die gegeneinander isoliert sind und von denen jeder Ring unabhängig von den anderen mit dem Signalleiter verbunden ist. Im Zwischenraum zwischen dem Signalleiter und der Wandung ist abstandhaltend ein Dielektrikum mit einer DK im Bereich von 10⁰ vorgesehen . Zur Unterteilung der Masseelektrode wird diese in Streifen auf die Außenseite der Kondensatorsäule aufgebracht; jeder Streifen wird mit einem Masseleiter verbunden, der im Abstand von Dielektrikum angeordnet ist und der Zwischenraum abstandshaltend mit einem Dielektrikum mit einer DK im Bereich von 10⁰ aufgefüllt sein kann. Da sich die Signale auf dem im Abstand vom Dielektrikum angeordneten Signal- oder Masseleiter ungestört fortpflanzen. stehen die Signalspannngen (nahezu) gleichzeitig an den einem Teilkondensator zugeordneten Anschlussleiter an; die einzelnen Teilelektroden werden so (nahezu) gleichzeitig auf- bzw. entladen. Durch diese "Gleichzeitigkeit" werden Laufzeitunterschiede unterdrückt und deren störender Einflussbereich hin zu höheren Frequenzen verschoben. Vorteilhaft ist jeder der Verbindungsleiter etwa punktförmig an den zugeordneten Signal- oder Masseleiter angeschlossen, und zwar mittig in Bezug auf den zugeordneten Teilkondensator, wobei sich "Mitte" auf die in Fortpflanzungsrichtung der Signale liegende Mitte der Teilelektrode bezieht. Dadurch wird der das (nahezu) gleichzeitiges Auf- bzw. Entladen des unterteilten Kondensators bewirkende Ladungszustand des Leiters definiert.

Um bei der einen Ausführungsform den Masseleiter im Abstand vom Dielektrikum zu halten, wird der Masseleiter für jede der Kondensatorsäulen parallel zum Zentralkanal im Abstand vom Dielektrikum als leitender Streifen verlegt, wobei ein Dielektrikum mit einer DK im Bereich von 10° die Zwischenlage bildet. Bei dieser Anordnung ist es bei zweireihigen Lochbildern vorteilhaft, die Masseelektroden auf die Außenseiten zu legen. Bei drei- und mehrreihigen Lochbildern sind die einander zugewandten Seiten von Kondensatorsäulen der innen liegenden Reihen mit dem Masseleiter versehen: da in aller Regel bei solchen Anordnungen die Zentralkanäle "auf Lücke" gestellt sind, lässt sich der Masseleiter auch als hochstehender Steg unterbringen.

Zum Anpassen ihrer elektrischen Eigenschaften sind die gegeneinander isolierten Teilelektroden über elektronische Bauelemente in Art einer Reihenschaltung verbunden, etwa über vorteilhaft als SMD-Bauelemente ausgebildete Widerstände, Varistoren o.dgl. Als Widerstandselemente werden vorzugsweise rein ohm' sche Widerstände vorgesehen. Da die Fortpflanzungsgeschwindigkeit der Signale auf dem Signal- oder dem Masseleiter von der DK des diesen Leiter umgebenden Materials abhängt, und beim Einschalten von Widerständen in signalführende Leiter Unstetigkeitsstellen entstehen, sollen die Widerstandswerte diese Widerstände im Bereich des Wellenwiderstand des mit einem Dielektrikum hoher DK in Wechselwirkung stehenden Signal- oder des Masseleiters liegen, wodurch einschaltbedingte Unstetigkeiten klein gehalten werden. Diese Bauelemente werden auf zwei benachbarte Teilelektroden aufgelötet und verbinden diese benachbarte Teilelektroden elektrisch miteinander. Um eine Spannungsbegrenzung, insbesondere eine Spitzenspannungsbegrenzung bei Stoßbelastungen zu erreichen, eignen sich auch Varistoren, wobei der Wert der Begrenzungsspannung durch Auswahl des Varistors bzw. des varistorartig wirkenden Materials erreicht werden kann. Alternativ können auf vorzugsweise mittels Siebdruckverfahren aufgebrachte Streifen einer Widerstandspaste vorgesehen werden, die zwei benachbarte Leiterbereiche in gleicher Weise miteinander verbinden und so im Zwischenbereich der unterteilten Beläge angeordnet sind.

Neben rein ohm' schen Widerstanden können auch induktive Glieder zur Beschaltung von Signal- oder Masseleiter vorgesehen sein, die dadurch auch eine induktive Komponente erhalten. Dazu ist der Signalleiter oder der Masse- bzw. Masseableiter mit mindestens einer Induktivität beschaltet, wofür SMD-Spulen aber alternativ auch Streifen. Perlen oder Ringe aus einem ferritischen Material an bzw. auf Signal- bzw. Masseleiter vorgesehen sein können, da durch deren Rückwirkung die Selbstinduktion von Signalleiter bzw. Masseleiter im Bereich solcher Streifen oder Ringe in einem Maße erhöht wird, die von der Geometrie und dem Material abhängt; somit kann durch Wahl dieser Parameter diese Erhöhung den Erfordernissen angepasst werden. Diese Induktivitäten sind vorteilhaft zwischen zumindest einigen der Anschluss-Stellen der Verbindungsleiter zweier aufeinander folgender Teilelektroden der unterteilten Signalbzw. Masseelektroden vorgesehen. Durch diese Ausbildung entstehen Filter mit parallel geschalteten Querkondensatoren, die über Längsinduktivitäten verbunden sind. Die Filtereigenschaften solcher Anordnungen können durch Wahl des Ring-Materials und/ oder der Kondensatoren auf den Bedarf eingestellt werden. Daneben besteht auch die Möglichkeit, in dem frei verlaufenen Signal- bzw. Masseleiter induktive Bauelemente - zB. SMD-Spulen - einzufügen, die dann in Serie zur Signal- bzw. Masseverbindung liegen. Solche Induktivitäten werden vorzugsweise zwischen den Anschluss-Stellen der Verbindungsleiter zweier aufeinander folgender Teilelektroden von in einzelne Teilelektroden unterteilen Signal- bzw. Masseelektroden vorgesehen. So entstehen im Zusammenwirken dieser Längsinduktivitäten im Zusammenwirken mit den parallel geschalteten Querkondensatoren Filter, deren Filtereigenschaften durch Wahl des Ring-Materials und/oder der Kondensatoren auf den Bedarf eingestellt werden können. Daneben ist auch möglich, in dem frei verlaufenden Signal- bzw. Masseleiter induktive Bauelemente - etwa SMD-Spulen - einzufügen, die dann in Serie zur Signal- bzw. Masseverbindung liegen.

Vorteilhaft ist ein solches Mehrfachfilter mit einer äußeren Metallisierung versehen, die zum einen eine Abschirmung gegen Störsignale bildet und die zum anderen auch so ausgebildet ist, dass sie das Gehäuse des Filterstecker bildet, dessen Inneres von dem Mehrfachfilter gebildet ist. Diese Metallisierung bildet dabei auch den Gegenkontakt für den über einen Anschluss-Stecker zugeführten (oder abzuleitenden) Masseanschluss.

Zur Herstellung eines solchen Filters mit unterteilten Masseelektroden wird diese in Streifen auf das Dielektrikum aufgebracht, was beispielsweise im Siebdruckverfahren erfolgen kann. Über die Masseelektrode wird eine weitere Lage eines Dielektrikums mit niedriger DK aufgetragen, die jedoch mittig Löcher aufweisen. Auf diese dielektrische Schicht wird nun der Masseleiter aufgebracht, der vom Dielektrikum mit hoher DK beabstandet, durch die Löcher greifend, leitend mit den Masseelektroden verbunden ist.

Dieser Masseleiter wird vorteilhaft als achsparalleler, längsverlaufender Streifen aufgebracht, etwa wiederum mittels Siebdruckverfahren; dieser Streifen kann, wenn größere Querschnitte benötigt werden, auch als hochkant stehender Leiter ausgebildet sein. Durch diese Ausbildung bleiben die Seitenbereiche der Teilelektroden frei und stehen für elektrische Bauelemente zwischen den Teilelektroden zur Verfügung. Bei dieser Ausbildung folgen die Teilelektroden in Ausbreitungsrichtung des Signals aufeinander, zwar erfolgt die Ausbreitung der Ladung auf ihnen wegen des unmittelbaren Anliegens an einem Dielektrikum mit hoher DK verzögert, jedoch werden die einzelnen Teilelektroden eines jeden Kondensators (nahezu) gleichzeitig aufge- bzw. entladen, da sich der Masseleiter (bzw. der Signalleiter bei entsprechender Ausbildung) in einer Umgebung mit niedriger DK befindet und die Signalfortpflanzungsgeschwindigkeit somit (nahezu) der Signalfortpflanzungsgeschwindigkeit im Vakuum entspricht.
Wegen der etwa punktförmigen Anbindung der Teilelektroden an den Masseleiter können Laufzeitdifferenzen allenfalls bei der Ladungs-Ausbreitung auf den Teilelektroden entstehen, nicht jedoch im Bereich des Kondensators insgesamt.

Diese die elektrischen Eigenschaften anpassenden Widerstände werden als in Streifen aufgetragene Widerstandspaste erstellt, die vorteilhaft in Randnähe, und so symmetrisch zum mittigen Masseleiter angeordnet sind. Sie werden auf eine isolierende Schicht aufgetragen, die beispielsweise im Siebdruckverfahren auf die metallisierten Bereiche der mit dem Masseleiter verbundenen Teilkondensatoren aufgebracht ist. Die isolierende Schicht enthält für jede der Teilelektroden eine Aussparung, über die die Kontaktierung mit dem Widerstandsstreifen erfolgt, deren Widerstandswerte dabei im Bereich des Wellenwiderstandes des mit einem Dielektrikum hoher DK wechsel-wirkenden Signal- oder Masseleiters liegen sollen. Durch diese Auslegung werden durch das Einschalten bedingte Unstetigkeitsstellen klein gehalten. Auch andere Bauelemente können vorgesehen sein, beispielsweise Schichten mit varistorartigem Verhalten. Die die Induktivität des Masseleiters erhöhenden Induktivitäten werden zwischen den Verbindungslöchern zu den Teilelektroden ferritische Materialien schichtweise aufgetragen; auch dieses Auftragen erfolgt vorteilhaft im Siebdruckverfahren. Durch diese ferritischen Auflagen werden die Längsinduktivitäten des Masseleiter-Abschnittes erhöht; jeder dieser Abschnitte bildet dann zusammen mit den beiden zugeordneten Teilkondensatoren als Querkondensatoren Pi-Filter, deren Parameter über die Kondensatorenkapazitäten und die Größe der Längsinduktivitäten zwischen ihnen bestimmt sind. Es versteht sich von selbst, dass die auf den Masseleiter bezogenen Ausführungen sinngemäß auch für den Signalleiter gelten, der dann vom Dielektrikum mit hoher DK beabstandet, mit in Teilelektroden unterteilten Signalelektroden verbunden ist. Es versteht sich weiter von selbst, dass Strukturen, wie hier an Hand einer Dickschichttechnik beschrieben, auch mit photolithographischen Methoden und Auftragen entsprechender Schichten in der von der Herstellung von Bauelementen in Dünnschichttechnik bekannten Weise realisierbar sind.

Solche Mehrfachfilter lassen sich aufgrund ihrer blockartigen Struktur ohne weiteres in Steckverbinder einfügen, so dass vielpolige Filtersteckverbinder zur Verfügung stehen, die bis in hohe Frequenzbereiche einsetzbar, wirtschaftlich herstellbar und die betriebssicher sind. Sind diese Mehrfachfilter auf die Abmessungen von Gegensteckverbindern abgestellt, und mit äußeren Masseanschlüssen versehen - beispielsweise durch äußere Metallisierung - können sie selbst als Filterstecker dienen.

Das Wesen der Erfindung wird an Hand der in den Figuren 1 bis 12 dargestellten Ausführungsbeispielen näher erläutert; dabei zeigen:
Fig. 1: 9-Pin Mehrfachfilter Ausführungsform I, perspektivische Ansicht,
   Fig. 1a: Aufsicht,
   Fig. 1b: Schnitt B-B (Fig. 1),
   Fig. 1c: Schnitt C-C (Fig. 1),
   Fig. 1d: Schnitt D-D (Fig. 1);
Fig. 2: 9-Pin Mehrfachfilter Ausführungsform II, perspektivische Ansicht,
   Fig. 2a: Aufsicht,
   Fig. 2b:Schnitt B-B (Fig. 2).
   Fig. 2c: Schnitt C-C (Fig. 2),
   Fig. 2d: Schnitt D-D (Fig. 2);
Fig. 3: Kondensatorsäule Ausführungsform II, Querschnitt, Zentralkanal zentrisch, seitig metallisiert,
   Fig. 3a: Zentralkanal zentrisch, einseitig metallisiert,
   Fig. 3b: Zentralkanal zentrisch, zweiseitig metallisiert,
   Fig. 3c: Zentralkanal exzentrisch, einseitig metallisiert,
   Fig. 3d: Zentralkanal exzentrisch, zweiseitig metallisiert,
   Fig. 3e: Zentralkanal exzentrisch, vierseitig metallisiert;
Fig. 4: Ersatzschaltbild eines Säulen-Kondensators, einfacher Rohrkondens. (Schema),
   Fig. 4a: Rohrkondensator, Signalelektrode unterteilt
   Fig. 4b: Rohrkondensator, Masseelektrode unterteilt,
   Fig. 4c: Rohrkondensator, Masseelektrode unterteilt, mit Längsinduktivität,
   Fig. 4d: Ersatzschaltbild eines Rohrkondensators nach Fig. 4c,
   Fig. 4e: Kondensatorsäule, Signalelektrode unterteilt,
   Fig. 4f: Kondensatorsäule. Masseelektrode unterteilt;
Fig. 5: Filtereinsatz für Sub-D 9pin-Steckverbinder, perspektivisches Schema; Fig. 5a: Aufsicht, schematisch;
Fig. 6: Sub-D 15pin-Steckverbinder mit Filtereinsatz. perspektivisches Schema:
   Fig. 6a: Aufsicht. schematisch,
   Fig. 6b: Schnitt gemäß B-B. Fig. 6;
   Fig. 6c: Schnitt gemäß C-C, Fig. 6:
Fig. 7: Steckverbinder mit KOAX- und Signal- Anschlüssen, letztere mit Filtereinsätzen (Explosionsdarstellung);
Fig. 8: Kondensatorsäule für Steckverbinder, dreifach gemäß Fig. 7,
   Fig. 8a: Einfache Kondensatorsäule, Aufsicht,
   Fig. 8b: Zweifache Kondensatorsäule, Aufsicht,
   Fig. 8c: Seitansicht (Schnitt C-C, Fig. 8),
   Fig. 8d: Seitansicht mit unterteilter Masseelektr.. (Schnitt e-e, Fig. 8);
Fig. 9: Kondensatorsäule m. unterteilter Masseelektrode m, u. Bauelementen. Aufsicht
   Fig. 9a: Seitansicht. geschnitten.
   Fig. 9b: Stirnseiten-Ansicht;
Fig. 10: Kondensatorsäule m. unterteilter Masseelektrode, diskreten. Bauelementen und mit Längsinduktivitäten in dem Masseleiter, Aufsicht,
   Fig. 10a: Seitansicht,
   Fig. 10b: Stirnseiten-Ansicht:
Fig. 11: Kondensatorsäule mit unterteilter Masseelektrode in Dickschichttechnik Aufsicht,
   Fig. 11a: Längsschnitt B-B (Fig. 11)
   Fig. 11b: Längsschnitt C-C (Fig. 11),
   Fig. 11c: Querschnitt D-D (Fig. 11);
Fig. 12: Kondensatorsäule m. unterteilter Masseelektrode in Dickschichttechnik, u. Längsinduktivitäten in der Masseableitung, Aufsicht,
   Fig. 12a Längsschnitt B-B (Fig. 12)
   Fig. 12b: Längsschnitt C-C (Fig. 12),
   Fig. 12c: Längsschnitt D-D (Fig. 12)
   Fig. 12d: Querschnitt E-E (Fig. 12).

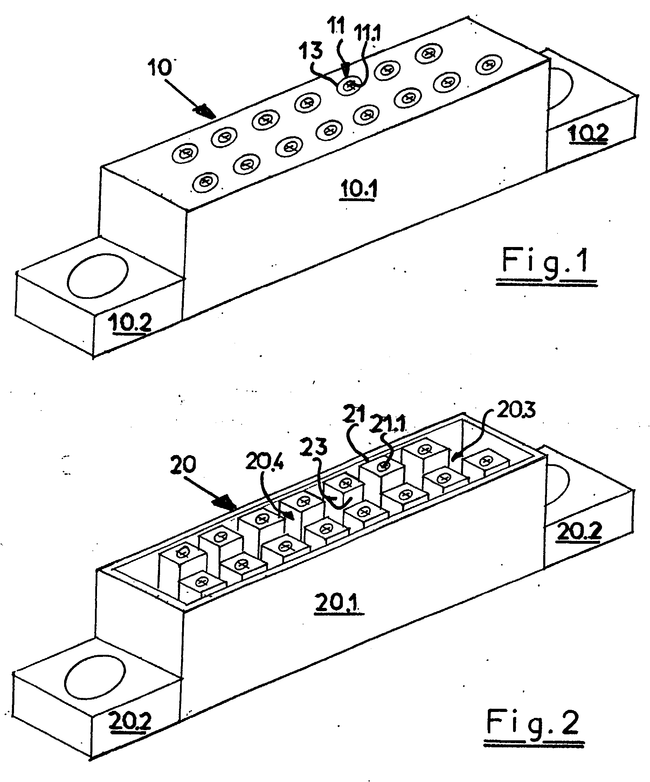

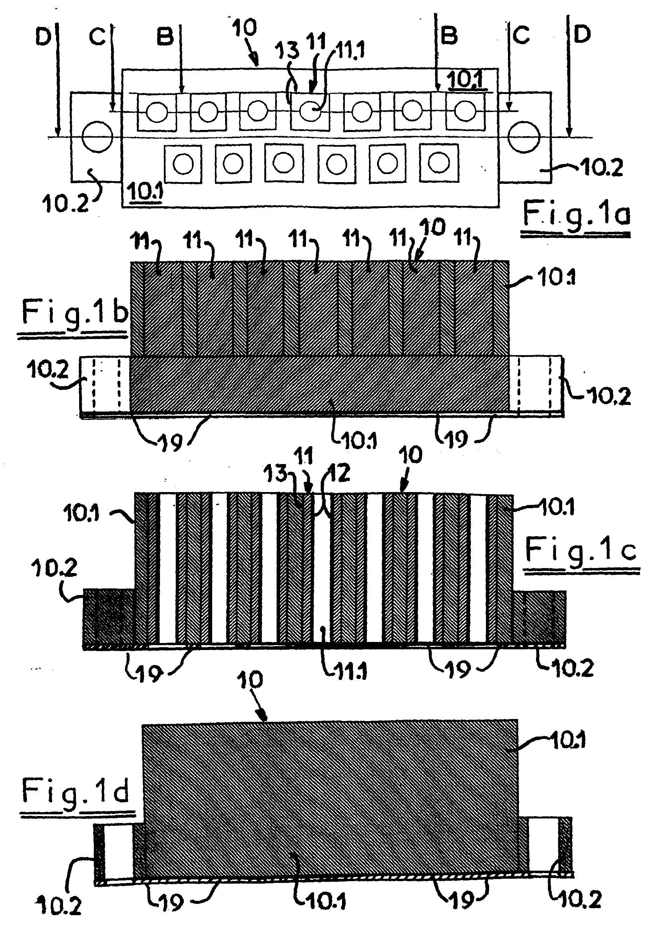

Die Figuren 1 zeigen eine erste Ausführungsform eines solchen Mehrfachfilters 10 mit einem aus einem isolierenden Material gebildeten Block 10.1. in den die einzelnen Kondensatorsäulen 11 in regelmäßigen Mustern angeordnet sind. Dieser Block 10.1 ist mit Befestigungsnasen 10.2 versehen, die ein Festschrauben an einen Träger erlauben. Die Kondensatorsäulen 11 - gleichgültig ob mit rundem (Fig. 1) oder mit viereckigem Querschnitt (Fig. 1a - 1d) - sind dabei in Reihen und Spalten angeordnet, wobei deren Anzahl aus Anordnung von der Vorgabe der zu verbindenden Signalleitern abhängt; dabei können sowohl die Spalten als auch die Reihen über die in Fig. 1 gezeigte Anzahl von 9 Anschlüssen hinaus gehen, wobei die Anschlüsse in den Spalten sowohl fluchten können als auch (wie dargestellt) gegenüber den Anschlüssen der benachbarten Reihen versetzt angeordnet sein. Jede der Kondensatorsäulen 11 - in den Figuren 1 ist der besseren Übersichtlichkeit wegen jeweils nur eine der im Grundsatz gleich aufgebauten Kondensatorsäulen 11 mit Bezugszeichen versehen - ist mit einem Zentralkanal 11.1 für den (nicht näher dargestellten) Signalleiter versehen; ihre innere Oberfläche ist ganz, oder zumindest teilweise, von einer Metallisierung als Signalelektrode 12 versehen, die von dem Dielektrikum 14. das im allgemeinen eine DK von über 10³ aufweist, umgeben ist. Im Abstand von der Signalelektrode 12 ist die Masseelektrode 13 angeordnet, die als Gegenelektrode wirkend. zusammen mit dem Dielektrikum 14 die Kapazität des jeweiligen Kondensators bestimmt. Quer zu den Erstreckungen der Kondensatorsäule 11, und mit den Masseelektroden 13 elektrisch verbunden, ist ein (zur besseren Erkennbarkeit überhöht dargestellt) Masseableiter 19 vorgesehen, der mit dem den Masseanschluss bildenden Metallbelag 19.1 (hier unter) dem Block 10.1 versehen ist und beim Befestigen masseführende Metallschichten angedrückt, die Verbindung der Masseelektroden 13 mit der allgemeinen Masse, der Gerätemasse herstellt. Vorteilhaft ist diese Masseanschluss-Stelle in das Befestigungsmittel des Mehrfachfilters 10 an dem Steckverbinder oder der Platine einer Schaltung integriert, das in bevorzugter Weise als Befestigungsauge 10.2 ausgebildet ist. So wird es möglich, die Masseverbindung mit sicherer elektrischer Kontaktgabe herzustellen, da mit der Befestigung die Anschlussstelle auf die entsprechende Gegenanlage am Steckverbinder bzw. an seinem Gehäuse angedrückt wird. Zur Herstellung dieser Strukturen werden die einzelnen Kondensatorsäulen 10 in Art von "Spaghetti" hergestellt, zu einem Pack zusammengefügt und mit einem isolierenden Material geeigneter Konstanten zu dem Block 10.1 vereinigt. Um dem Block 10.1 gewünschte Eigenschaften zu geben, wird das isolierende Material etwa hinsichtlich mechanischer Festigkeit oder niedrigerer DK auf den Bedarfsfall abgestimmt.

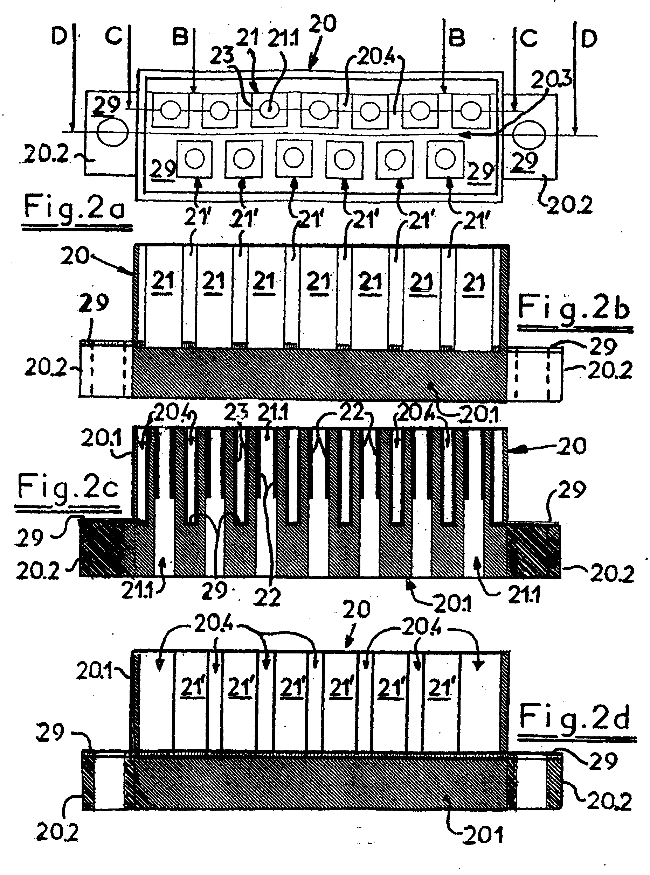

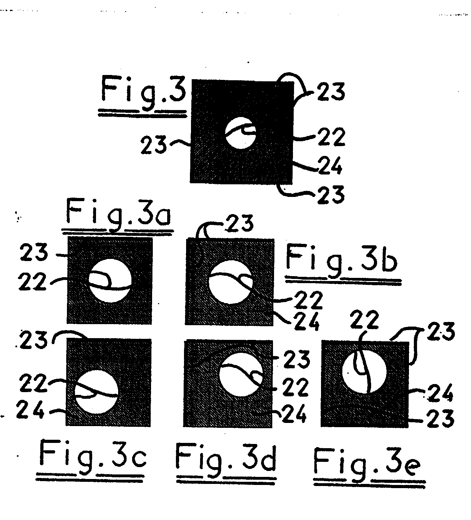

Die Figuren 2 zeigen diese Verhältnisse an einem Ausführungsbeispiel einer zweiten Ausführungsform: Der Block 20.1 ist hier von Längs- und Quernuten 20.3, 20.4 durchzogen, die im Querschnitt viereckigen Kondensatorsäulen 21 sind gegeneinander freigestellt (was runde Querschnitte nicht ausschließt); durch die Quernuten 20.4. sind die Filtersäulen 21' der hinteren Reihe sichtbar. Jede der Kondensatorsäulen 21 - in den Figuren 2 ist ebenfalls der besseren Übersichtlichkeit wegen jeweils nur eine der im Grundsatz gleich aufgebauten Kondensatorsäulen 21 mit Bezugszeichen versehen - steht mit ihrem Fuß auf einer von der Innenseite des ausgenommenen Blockes 20.1 gebildeten Basis, auf die der Masseableiter 29 aufgebracht ist, und die sich als Metallisierung 29.1 zumindest über die Innenseiten der äußeren Stirnseiten des Blockes 20.1 fortsetzt. Diese stellt die elektrische Verbindung der als Masseelektrode 23 wirkende Metallisierung mit dem Masseanschluss auf den Befestigungsnasen 20.2 her, zu dem die Masseableitung 29 geführt ist; ein Metallisieren aller vier Innenseiten der Rand-Wandungen des Blockes 20.1 verbessert die Abschirmung (und führt zu der Ausführungsform, bei der auch die Außenseiten metallisiert sind, und die dann den Filterstecker insgesamt bildet). Hier wirken die metallisierten Flächen etwa mit federnden Kontakten der Gegenstecker zusammen und stellen so die Masseverbindung her. Auch hier weist jede Kondensatorsäule 21 einen Zentralkanal 21.1 für den (hier nicht näher dargestellten) Signalleiter auf, wobei die Kondensatorsäule 21 selbst das Dielektrikum 24 hoher DK bildet. Die Masseelektroden 23 werden von den Metallisierungen der äußeren Seitenflächen jeder Kondensatorsäule 21 gebildet. Dabei können - wie oben beschrieben - die Masseanschluss-Stelle auch gleichzeitig als Befestigungsaugen 20.2 für das Filter 20 an dem Steckverbinder ausgebildet sein, was neben der Befestigung auch eine sichere Masseverbindung ermöglicht. Die Figuren 3 zeigen mögliche Anordnungen dieser Metallisierungen 23, die einseitig, zweiseitig. dreiseitig oder auch vierseitig vorgesehen sein können. Dabei kann der Zentralkanal 21 in dem Dielektrikum 24 hoher DK zentrisch oder exzentrisch angeordnet sein.

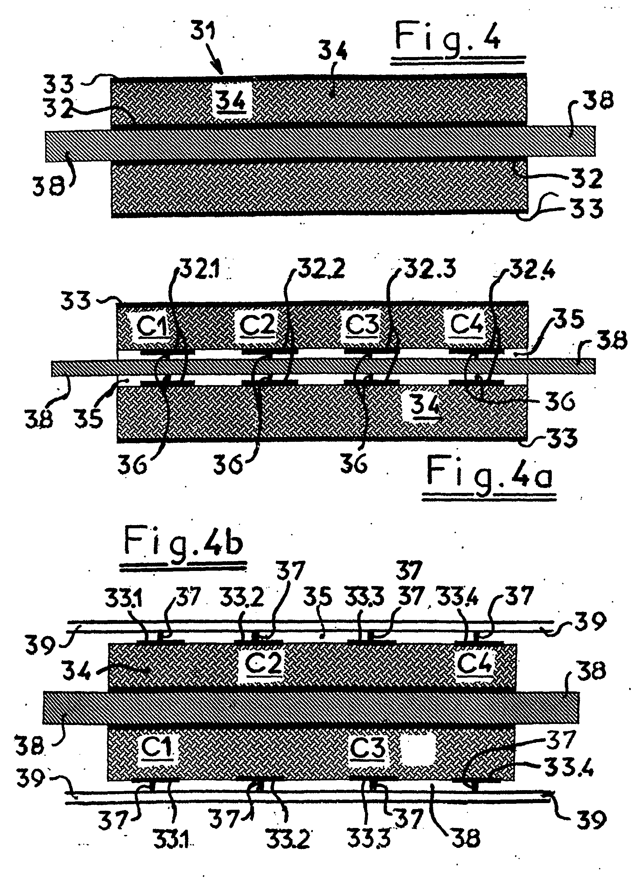

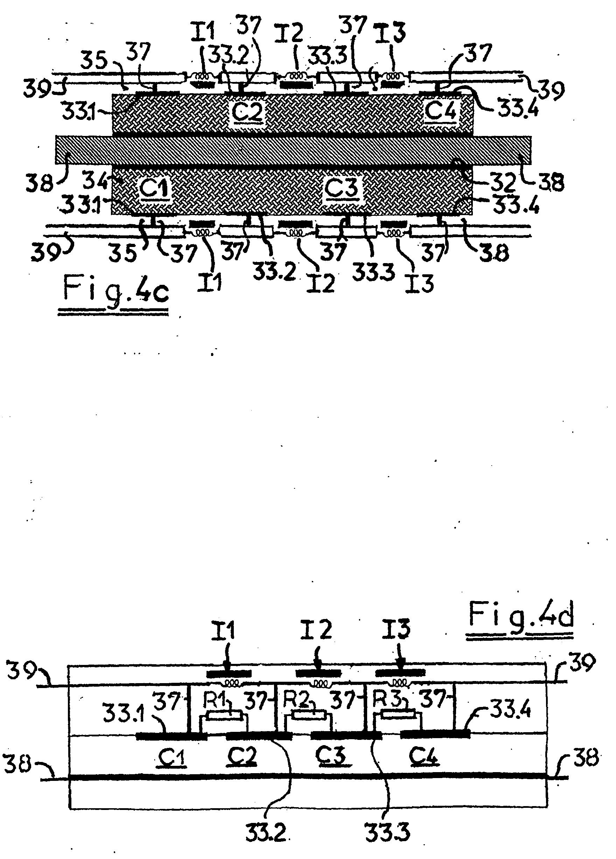

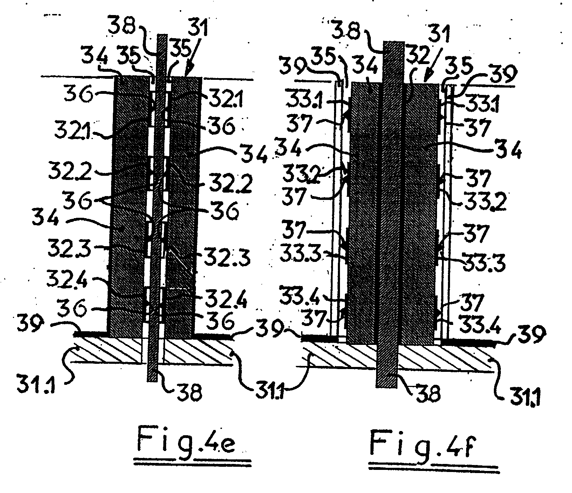

Zum besseren Verständnis ist in den Figuren 4 schematisch der Übergang von einem Rohrkondensator 31 (Fig. 4) zu einem laufzeitkorrigierten Rohrkondensatoren, bei denen eine der Elektroden des Kondensators (Fig. 4a: Signalelektrode 32: Fig. 4b: Masseelektrode 33) in Teilelektroden C1, C2, C3 und C4 unterteilt ist, die über den Signalleiter (Fig. 4a) bzw. den Masseleiter (Fig. 4b) in Art einer Reihenschaltung verbunden sind, dargestellt. Die Figur 4c zeigt die Anordnung nach Fig. 4b. jedoch mit Längsinduktivitäten. Die Signale breiten sich auf dem von Signalleiter 38 und Masseleiter 39 gebildete Anordnung nach den Fig. 4 mit einer Fortpflanzungsgeschwindigkeit aus, die der entspricht, die diese Leiterkonfiguration etwa im Vakuum hätte. Die Fortpflanzungsgeschwindigkeit des Signals verringert sich, wenn dessen Ausbreitung längs des Rohrkondensators nach Fig. 4 mit seinem Dielektrikum 34 erfolgt, in Abhängigkeit von dessen DK, sie wird herabgesetzt; diese Herabsetzung ist eine Folge der von der DK abhängigen Veränderung des Wellenwiderstandes Z. Dadurch erfolgt das Auf- und Entladen der Elektroden "verschmiert", was zu einer starken Frequenzabhängigkeit des Kondensators führt. Um diese "Verschmierung" des Auf- und des Entladevorganges aufzuheben (oder die Grenzfrequenz des Einsetzens zu höheren Frequenzen hin zu verschieben) wird eine der Kondensatorelektroden in Teilelektroden unterteilt; die Teilelektroden der Signalelektrode 32.1, 32.2, 32.3 und 32.4 zeigt Fig. 4c, die Teilelektroden der Masseelektrode 33.1, 33.2, 33.3 und 33.4 die Fig. 4d. Dabei verläuft der Signalleiter 31 (Fig. 4a) bzw. der Masseleiter 39 (Fig. 4b) in einer Umgebung niedriger DK, die (nahezu) dem Vakuum entspricht, was hier durch Luft angedeutet ist aber die Verwendung eines isolierenden Stoffen mit einer DK nahe 10° nicht ausschließt, wobei eine stoffliche Schicht darüber hinaus als mechanisch stabilisierend genutzt werden kann. Hier entspricht die Fortpflanzungsgeschwindigkeit des Signals auf dem Leiter etwa der im Vakuum.

Da die einzelnen Teilelektroden 32.1, 32.2, 32.3 und 32.4 bzw. 33.1, 33.2, 33.3 und 33.4 über die Verbindungsleiter Signal 36 bzw. Masse 37 mit dem korrespondierenden Leiter 38 bzw. 39 verbunden sind, werden die Teilkondensatoren C1, C2, C3 und C4 somit unverzögert auf- bzw. entladen, was sich infolge der Influenz-Wechselwirkung auch auf die Gegenelektrode überträgt. Somit gelingt es, die Teilelektroden 31.1, 31.2, 31.3 und 31.4 bzw. 35.1, 35.2, 35.3 und 35.4 der Teilkondensatoren und somit auch die Kondensatoren insgesamt unverzögert aufzuladen und zu entladen, was eine höhere Grenzfrequenz zulässt. In Figur 4c ist der Masseleiter 39 zusätzlich mit den Längsinduktivitäten I1, I2 und I3 belastet, die durch ferritische Schichten - nicht näher bezeichnet - zwischen den Anschluss-Stellen der Verbindungsleiter Masse 37 angeordnet sind. Somit liegen diese Längsinduktivitäten I1, I2 und I3 so, dass sie zusammen mit den Teilkondensatoren C1, C2, C3 und C4 Pi-Filter bilden und somit die Gesamt-Filterwirkung der Anordnung bestimmen.

Das Ersatzschaltbild einer Kondensatorsäule - Fig. 4d - zeigt den durchgehenden, die Signalelektrode 32 bildenden Signalleiter 38 und die in vier Teilelektroden 33.1, 33.2, 33.3 und 33.4 unterteilte Masseelektrode, wobei die Signalelektrode 32 und jeder der Teilelektroden 33.1, 33.2. 33.3 und 33.4 je einen Teilkondensator C1, C2, C3 und C4 in Parallelschaltung bilden, deren Dielektrikum 34 eine Schicht hoher DK (10³ - 10⁴) ist. Die Kapazität des Gesamtkondensators ist die Summe dieser Teilkapazitäten. Diese vier Teilelektroden sind über die Verbindungsleiter 36 mit dem Masseableiter 39 verbunden, damit sind die Teilkondensatoren C1, C2, C3 und C4 und so auch der Gesamtkondensator gegen Masse geschaltet, als Filterkondensatoren wirksam. Die Verbindungsleiter 37 und der Masseableiter 39 verlaufen dabei in einem Bereich 35 niedriger DK und somit außerhalb des Einflussbereichs hoher DK; sich auf dem Masseleiter ausbreitende Signale bleiben unbeeinflusst. Die Teilelektroden 33.1. 33.2. 33.3 und 33.4 sind über Widerstände R1, R2 und R3 gekoppelt; wobei diese Widerstände zusammen mit den Teilelektroden 33.1, 33.2, 33.3 und 33.4 eine Reihenschaltung bilden. Die Abstimmung der Widerstände erfolgt so, dass seine Größe dem Wellenwiderstand Z des mit einem Dielektrikum hoher DK in Wechselwirkung stehenden Masseableiters 39 (oder Signalleiters 38) entspricht.

In den Masseleiter 39 ist zwischen den Anschlusstellen der einzelnen Verbindungsleiter 37 eine aus Teil-Längsinduktivitäten I1, I2 und I3 zusammengesetzte Längsinduktivitäten eingeschaltet, gebildet durch am Masseleiter angeordnet ferritische Teilstreifen - nicht näher bezeichnet. Durch die Permeabilität des aufgetragenen ferritischen Streifens sowie durch die Abmessungen dieser ferritischen Streifen kann die Größe jeder dieser in den Masseleiter 39 eingetragenen Teil-Längsinduktivitäten I1, I2 und I3 den Bedürfnissen entsprechend eingestellt werden, die zusammen mit dem vorgeschalteten und dem nachgeschalteten der Teilkondensatoren C1, C2, C3 und C4 jeweils ein Pi-Filter bilden, deren Filtereigenschaften in Verbindung mit den Kapazitäten der Teilkondensatoren C1, C2, C3 und C4 und den Teil-Längsinduktivitäten I1, I2, und I3 so eingestellt werden können, dass sie den Bedürfnissen entsprechen.

Die Figuren 4e und 4f zeigen je eine Kondensatorsäule 31 mit in Teilelektroden unterteilter Signalelektrode (Fig. 4e) bzw. Masseelektrode (Fig. 4f). Die Kondensatorsäule, deren Aufbau denen der Figuren 4a und 4b entspricht, ist hier auf die Basis 31.1 gesetzt, wie sie in einem Verbund in einen Mehrfach-Kondensator eingesetzt werden kann.

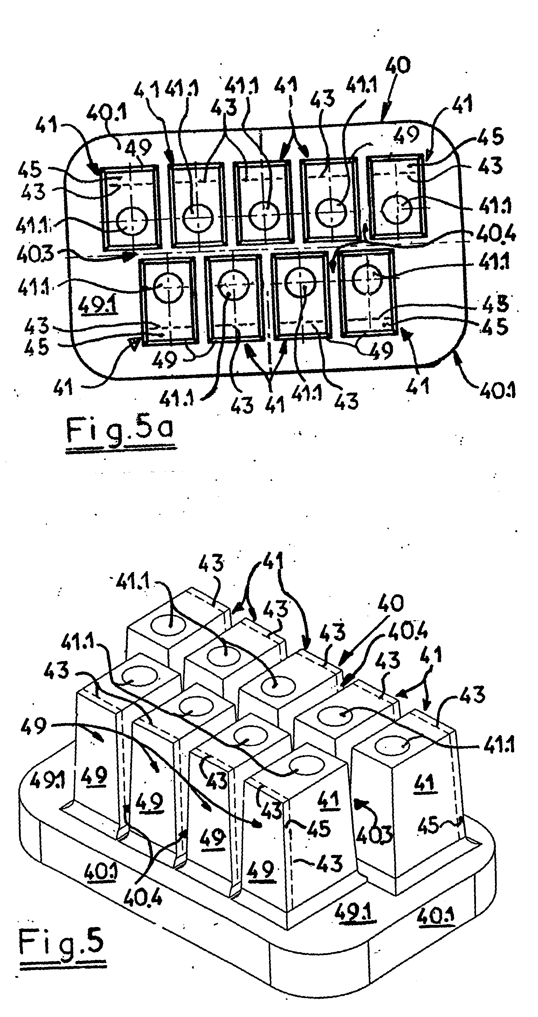

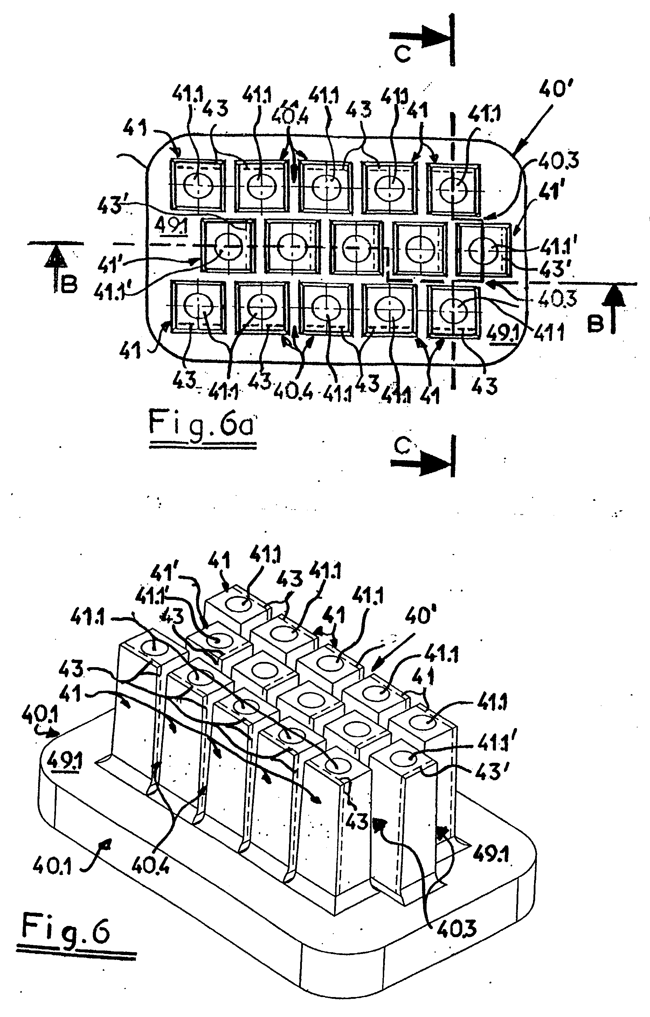

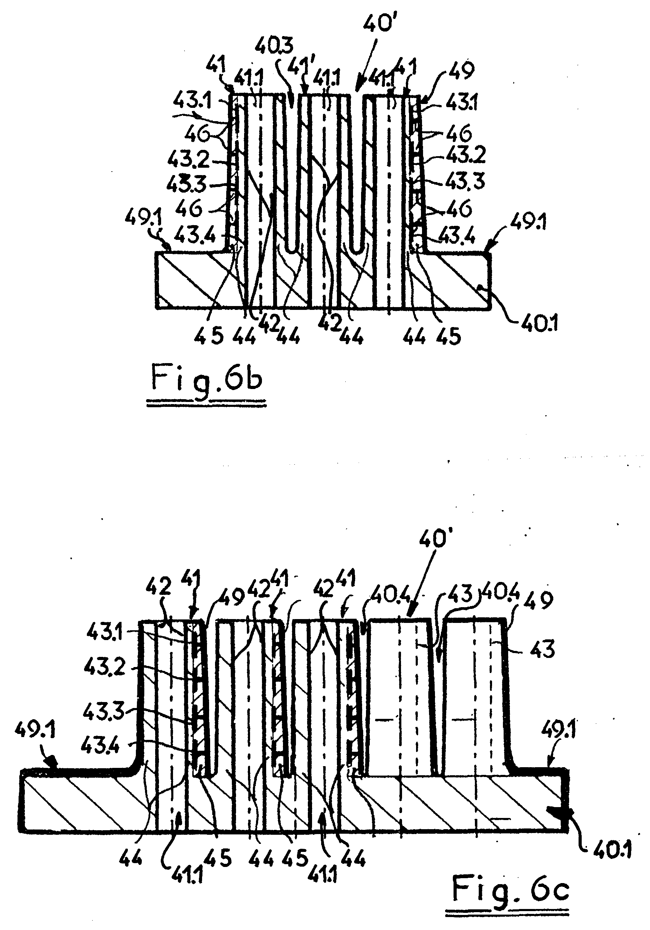

Die Figuren 5 und 6 zeigen zwei Ausführungsformen eines Mehrfachfilters mit Filterkondensatoren für Sub-D Steckverbinder mit 9 Pin (40 - Fig. 5) bzw. mit 15 Pin (40' - Fig. 6), wie er zum Anschließen peripherer Geräte z.B. an Computer üblich ist (wobei das bekannte Steckverbinder-Gehäuse nicht näher dargestellt ist). Die Kondensatorsäulen 41 beider sind entweder auf die Blockbasis 41.1 aufgesetzt, oder sie sind so ausgebildet, dass sie zu dem Block des Steckverbindereinsatzes 40 zusammenfügbar sind, wobei die Kondensatorsäulen durch Quernuten 40.4 voneinander getrennt sind.
Diese Ausführungsformen lassen sich mit den Herstellungsverfahren keramischer Formteile für die Elektronik wirtschaftlich passgenau herstellen. Die Kondensatorsäulen 41 sind mit Zentralkanälen 41.1 versehen, durch die die (nicht näher dargestellten) Signalleiter geführt sind.

Zumindest die Kondensatorsäulen 41 sind aus einem isolierenden Dielektrikum 14 hoher DK der Größenordnung 10³ bis 10⁴ hergestellt. Wegen der besonderen (mit den Figuren 4 näher beschriebenen) Verhältnisse kommt es hier zu dort beschriebenen Laufzeitphänomenen, die durch Unterteilung der Kondensatoren in Teilkondensatoren unterdrückt werden können. Daher ist hier die (eingebettete) Masseelektrode 43. Jede der Teilelektroden ist über einen Verbindungsleiter 47 mit dem Masseableiter 49 verbunden, die in einer Schicht 18 eines Dielektrikums niedriger DK verlaufen und sich auf der Oberfläche der Basis 40.1 als metallische Schicht 49.1 fortsetzt (soweit eine dielektrische Schicht vorgesehen ist und der Masseab- oder Signalleiter nicht frei in einem Luftraum verlaufen). Dadurch ist der Masseableiter 49 von den Bereichen hoher DK beabstandet, wodurch Laufzeitphänomene unterdrückt werden. Der Masseleiter 49 ist letztendlich herausgeführt und erlaubt so in einen Oberflächenbelag 49.1 übergehend, das Verbinden mit dem Gehäuse des Steckverbinders und so mit der Masse. Die unterteilten Masseelektroden 43.1, 43.2, 43.3 und 43.4 werden so angeordnet, dass sie sich unter den Außenseiten der Kondensatorsäulen 41 befinden. Ist - wie bei dem Mehrfachfilter 40' für den 15-Pin Sub-D Steckverbindern nach den Fig. 6, (mit gleichen Bezugszeichen wie Fig. 5, so dass hierfür die gleiche Beschreibung gilt) zusätzlich zu den beiden Reihen von Kondensatorsäulen nach den Fig. 5 eine Mittelreihe von Kondensatorsäulen 41 eingefügt, werden hier die unterteilten Masseelektroden 43.1 ... 43.4 vorteilhaft auf den Seiten der in der mittleren Reihe gelegenen Kondensatorsäulen 41, die in Richtung der Längserstreckung gleichgerichtet aufeinander folgen, vorgesehen, ohne Beschränkung auf diese Anordnung. Die Masseableiter 49 sind dabei auf die korrespondierenden Außenseiten dieser mittigen Kondensatorsäulen 41 aufgebracht; sie setzen sich zum Anschluss an das Steckverbindergehäuse (nicht näher dargestellt) im metallischen Belag 49.1 auf der Basis 40.1 fort. Diese Teil-Elektroden 43.1... 43.4 sind dabei von den Masseableiters 49 unter einer Schicht mit einem niedrigen DK eingebettet, so dass das Dielektrikum 44 mit hoher DK die Signalfortpflanzungsgeschwindigkeit nicht beeinflussen kann.

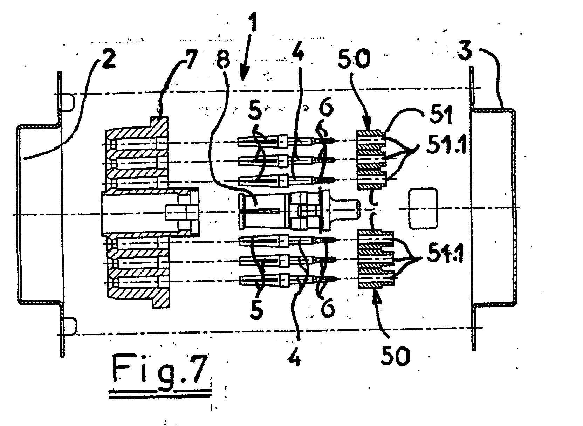

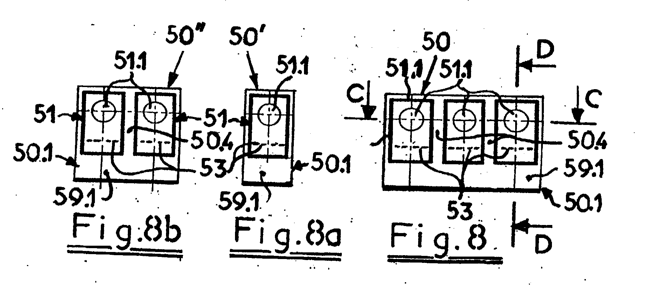

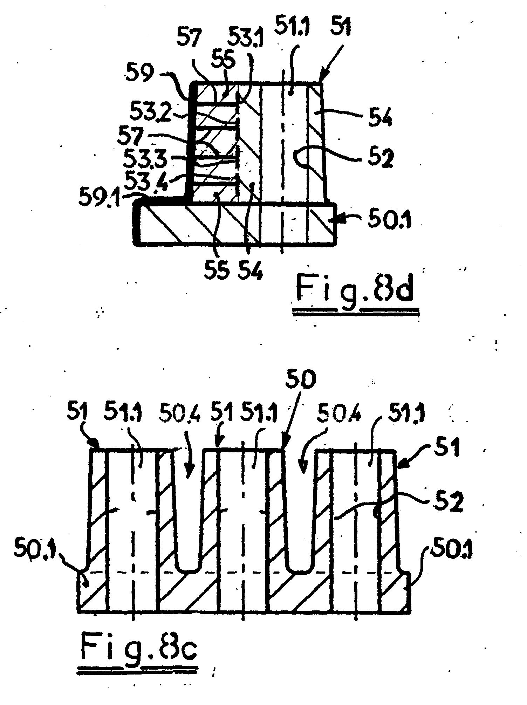

Figur 7 zeigt ein Mehrfachfilter 50 für einen Steckverbinder 1, der in seinen beiden Gehäuseschalen 2 und 3 neben dem üblichen Verbindungsmittel 4 für die Signalleitungen (nicht dargestellt) andere Anschlüsse aufweist, etwa Starkstromanschlüsse oder - wie in Fig. 7 gezeigt - einen KOAX-Anschluß 8. wobei die Steckenden 5 (hier Buchsen) in eine isolierende Steckeraufnahmen 7 eingesetzt sind und wobei deren Signalleiteranschlüsse 6 durch die im wesentlichen gleichartig aufgebauten Kondensatorsäulen 51 des Mehrfachfilters 50 geführt sind (deren Einzelheiten die Figuren 8 zeigen), Jedes der Mehrfachfilter 50 (Fig. 8 - dreifach) bzw. 50' (Fig. 8a - einfach oder 50'' (Fig. 8b - zweifach) weist entsprechend der Anzahl der zu filternden Signalleitungen eine Anzahl von auf die Basis 50.1 aufgesetzten Kondensatorsäulen 51 mit den Zentralkanäle 51.1 auf, durch die die Signalleiter, die Signalelektrode bildenden oder die an diese angeschlossen sind, geführt sind (nicht dargestellt). Das gesamte Mehrfachfilter 50 besteht aus einer dielektrischen Masse hoher DK, so auch jeder der Kondensatorsäulen 51, getrennt durch Quernuten 50.4. Auf zumindest einer der Außenseiten der Kondensatorsäulen 51 ist (auch unterteilte) Masseelektroden 53 aufgetragen und mit einer Schicht eines dielektrischen Materials 55 niedriger DK. Auf dieser ist der Masseableiter 59 angeordnet, der über Masse-Verbindungsleiter 57 mit den Teilelektroden elektrisch verbunden ist. Dabei sind die Mehrfachfilter 50 mit den Kondensatorsäulen 51 vorteilhaft einstückig ausgebildet (was jedoch ein Zusammenfügen der Filtereinsätze aus einfachen Kondensatorsäulen nicht ausschließt). In den hier gegenüber den Darstellungen in den Figuren 8c und 8d vergrößert wiedergegebenen Schnitten sind die Signalelektrode 52 sowie die MasseTeilelektroden 53.1, 53.2, 53.3 und 53.4 zu erkennen, die nahe der Innenwandung des Zentralkanals 51.1 angeordnet sind, und die über die Verbindungsleiter 57 mit dem Masseableiter 59 in Verbindung stehen. Diese Teilelektroden sind im Grenzgebiet der für die Kondensatoren bedeutsamen dielektrischen Masse 54 hoher DK und der dielektrischen Schicht 55 niedriger DK angeordnet, die Masse-Verbindungsleiter 57 sind durch diese Schicht 55 niedriger DK geführt, und der Masseleiter 59 weist hinreichenden Abstand von den dielektrischen Massen hoher DK auf, so dass die Signalfortpflanzungsgeschwindigkeit längs des Masseableiters unbeeinflusst bleibt. Der Masseableiter 59 ist auf der Basis 50.1 durch eine metallische Schicht 59.1 so fortgesetzt, dass ein Anschluss an die masseführende Schalen 2 bzw. 3 des Gehäuse 1 erreicht wird.

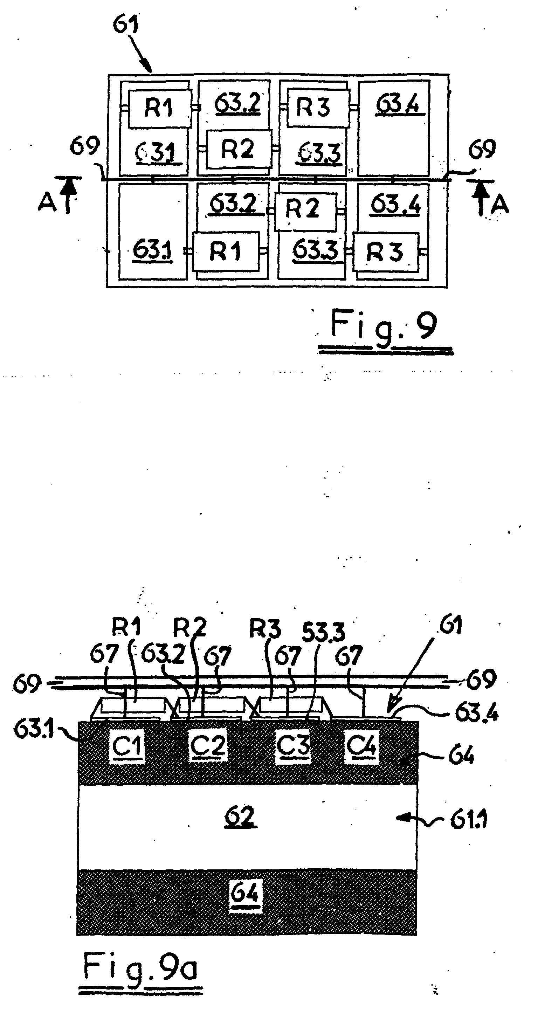

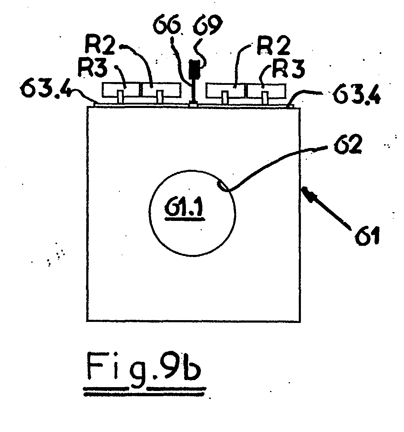

Die Figuren 9 zeigen eine Kondensatorsäule 61 mit unterteilter Masseelektrode 63, bei der diskrete Widerstands-Bauelemente separat aufgebracht sind, und zwar in Aufsicht (Fig.9), in Seitansicht geschnitten (Fig. 9a) und Stirnseiten-Ansicht (Fig. 9b). Die Kondensatorsäule 61.1 besteht aus einem Dielektrikum 64 hoher DK im Bereich von 10³ bis 10⁴; ist wiederum mit dem Zentralkanal 61.1. für den Signalleiter (nicht dargestellt) versehen, der entweder (formschlüssig) an der Innenwandung anliegend oder eine mit Metallisierung auf der Innenwandung die (nicht unterteilte) Signalelektrode 62 bildet. Die Teilkondensatoren C1, C2, C3 und C4 werden von dieser Signalelektrode und den Teilelektroden 63.1, 63.2, 63.3 und 63.4 der Masseelektrode gebildet. Diese Teilelektroden sind über die Masse-Verbindungsleiter 67 mit dem Masseableiter 69 verbunden. Die Teilelektroden 63.1, 63.2. 63.3 und 63.4 sind so angeordnet, dass zwischen ihnen und der Signalelektrode 62 das Dielektrikum 64 hoher DK liegt und die die Kapazität der Teilkondensatoren bestimmt. Der Masseleiter 69 selbst liegt außerhalb des Bereichs hoher DK (hier in Luft verlaufend dargestellt, jedoch ist auch eine Einbettung in eine dielektrische Masse niedriger DK möglich). Dadurch wird die Signalausbreitung auf dem Masseleiter nicht durch eine hohe DK gestört. Die Teilelektroden 63.1, 63.2, 63.3 und 63.4 sind hier beidseits des Masseleiters 69 angeordnet, so dass eine (nicht notwendige) Symmetrie gegeben ist.

Aufeinander folgende Teilelektroden sind jeweils durch Teilwiderstände R1, R2 und R3 verbunden, die einen Ladungsabfluss ermöglichen. Dabei verbinden Teilwiderstand R1 die Teilelektroden 63.1 und 63.2, Teilwiderstand R2 die Teilelektroden 63.2 und 63.3 und Teilwiderstand R3 die Teilelektroden 63.3 und 63.4. Diese Verbindung erfolgt vorteilhaft beidseits des Masseableiters, was wiederum eine gewisse (wiederum nicht notwendige) Symmetrie zur Folge hat. Dadurch sind in der Seitansicht die in zweiter Reihe liegenden Widerstände R2 und R3 teilweise verdeckt. Vorteilhaft werden dabei die Widerstands-Bauelemente "versetzt" angeordnet, so dass sich die Lötstellen im Randbereich der zugeordneten Teilelektrode nicht überlappen; vorteilhaft werden dabei auch die Widerstands-Bauelemente auf den beiden Seiten des Masseableiters 69 gegeneinander um eine Teileektroden-Breite versetzt. Diese Widerstandsbauelemente können - wie dargestellt - mit Lötfahnen versehen und so im Abstand aufgelötet sein; sie können auch als SMD-Bauelemente direkt aufgelötet werden; es ist selbstverständlich, zum Vermeiden elektrischer Schlüsse Isolationsschichten vorzusehen.

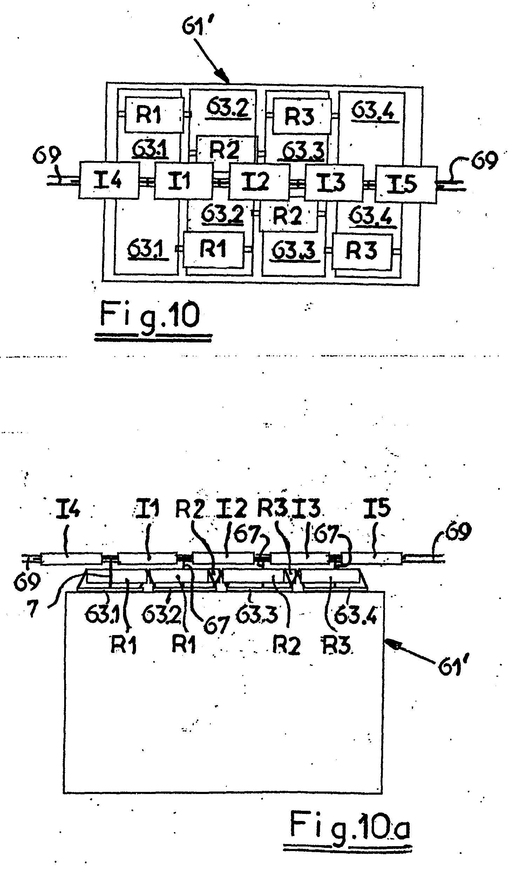

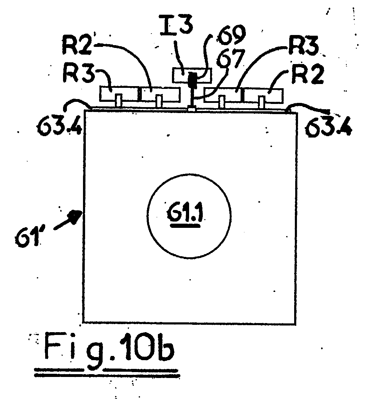

Die in den Figuren 10 dargestellte Kondensatorsäule 60' entspricht in ihrem Aufbau der Kondensatorsäule 60 (Fig. 9), lediglich sind in den Masseleiter 69 Induktivitäten I1, I2, I3 und I4 eingekoppelt. Mit diesen Induktivitäten, die in den Figur 4c und 4d näher dargestellt und im Zusammenhang damit beschrieben sind, lassen sich die elektrischen Parameter der einzelnen Filterstufen den erforderlichen bzw. gewünschten Bedingungen anpassen. In der Figur 10a sind zusätzlich im Eingang und im Ausgang des Masseableiters 69 Induktivitäten I4 und I5 dargestellt, die einzeln oder gemeinsam weitere Anpassungsmöglichkeiten eröffnen.

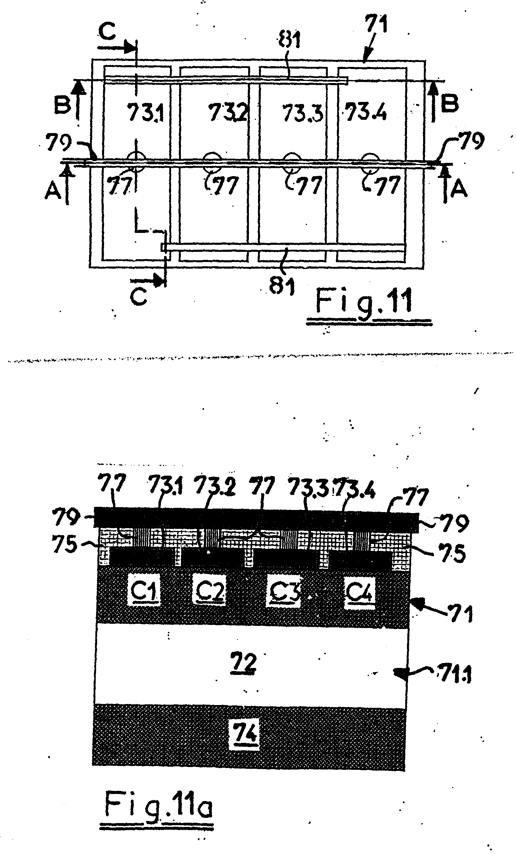

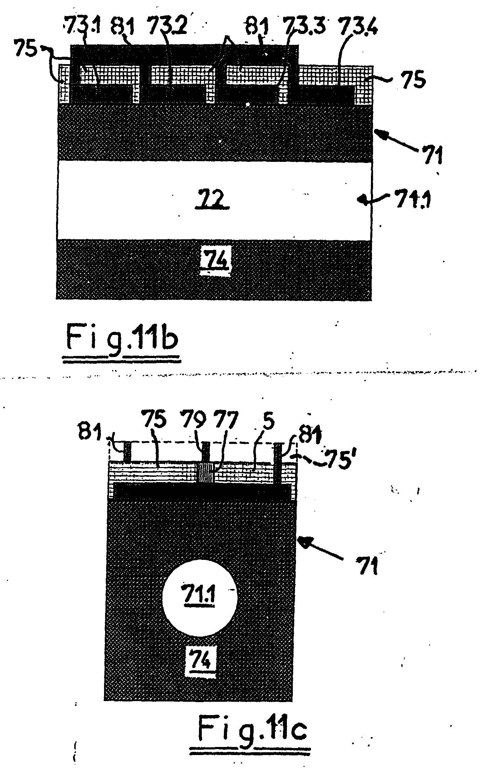

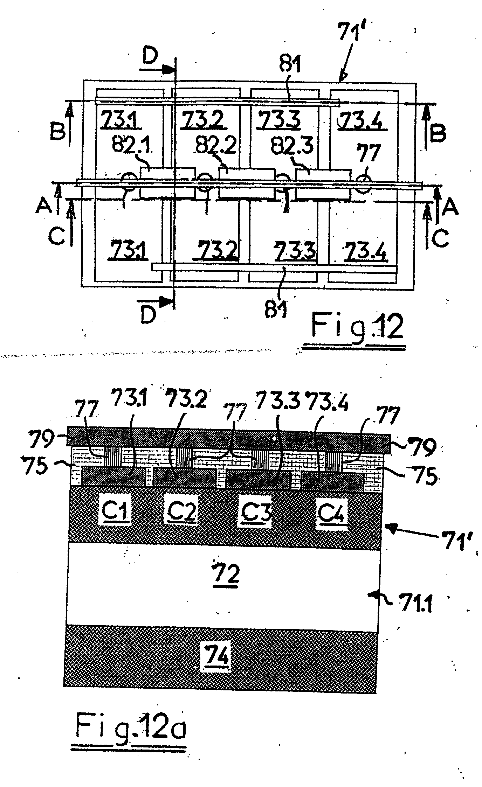

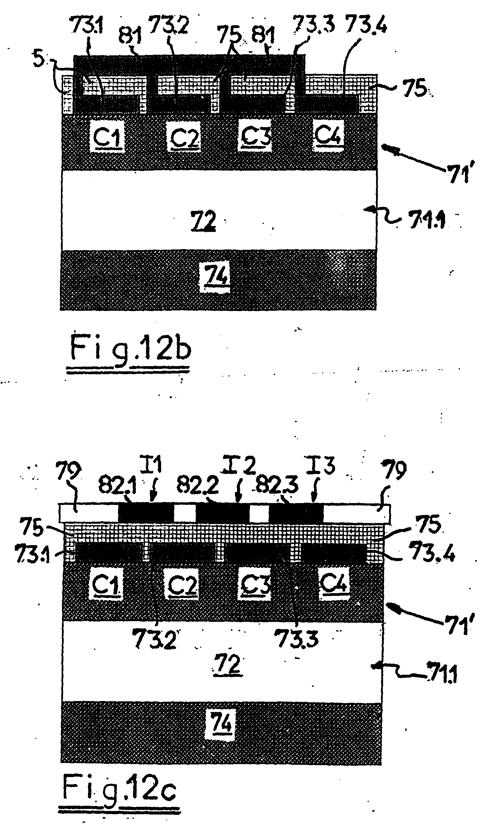

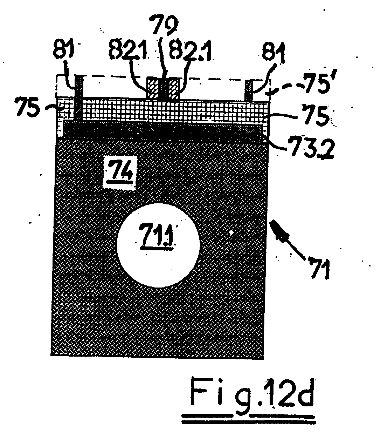

Die Figuren 11 und 12 zeigen eine sehr kompakte Ausführungsform der Kondensatorsäule, die auf die Ausführungsform 1 zurückgeht und bei der der Masseableiter zu im Abstand vom Signalleiter (bzw. Signalkontakt) angeordneten Leiterbahnen umgebildet ist. Dadurch kann eine äußerst kompakte, Bauweise erreicht werden, die der von miniaturisierten elektronischen Bauelementen entspricht.

In Fig. 11 ist ein Kompakt-Kondensatorsäule 71 dargestellt, mit einem Zentralkanal 61.1. sowie mit Teilkondensatoren C1, C2, C3 und C4. die eine Herstellung in bekannter Dickschichttechnik ermöglicht. Diese Kondensatorsäule 61 ist von einem Körper eines dielektrischen Materials 64 hoher DK gebildet, der von einem Zentralkanal 61.1 für den (nicht dargestellten) Signalleiter der - wie bereits beschrieben - entweder selbst die Signalelektrode des Kondensators bildet oder mit einem die Signalelektrode bildenden metallischen Belag 72 auf der Innenwandung des Zentralkanals 71.1 verbunden ist. Auf der Außenseite des Körpers, unmittelbar auf des Material mit hoher DK ist die in Teilelektroden 73.1, 73.2, 73.3 und 73.4 unterteilten Massenelektrode aufgebracht (dargestellt ist lediglich eine in überhöhter Darstellung). Dabei versteht es sich von selbst, dass auch der Signalleiter als Leiterbahn ausgebildet sein kann, wobei der Zentralkanal 71.1 eine diese Leiterbahn aufnehmenden Nut bildet. Jeder dieser Masse-Teilelektroden ist über einen MasseVerbindungsleiter 77 mit dem Masseableiter 79 verbunden, wobei die Kapazitäten der Teilkondensatoren C1, C2, C3 und C4 parallel geschaltet sind und die Filterkapazitäten bilden. Diese metallischen Verbinder werden dadurch gebildet, dass metallische Verbindungsmassen in offene Kanälen der Isolierschicht 75 eingebracht werden, die den Kontakt herstellen. Dazu werden diese Isolierschichten vorteilhaft im Siebdruckverfahren aufgebracht, wobei die offenen Kanäle als "unbedruckte Stellen" verbleiben. Vorteilhaft ist ein Aufbringen einer Lötpaste als metallische Masse, die in jeden der offenen Kanäle eindringt und die zum Verlöten von Teilelektrode und Masseableiter erhitzt wird.

Die Teilelektroden 73.1, 73.2, 73.3 und 73.4 sind mit einer Isolierschicht 75 abgedeckt, die eine niedrige DK im Bereich von 10° aufweist, und in der die Verbindungsleiter 77 verlaufen. Der Masseableiter 79 liegt durch diese Isolierschicht 75 im Abstand von den die Teilelektroden 73,1, 73.2, 73.3 und 73.4 bildenden metallischen Belägen und somit auch von dem Dielektrikum 74 hoher DK, so dass die Signalausbreitung durch den Einfluss einer hohen DK nicht beeinträchtigt ist.

Vorteilhaft sind die Teilelektroden 73.1, 73.2, 73.3 und 73.4 in ihrer Folge über Widerstände gekoppelt. Dazu sind diese Teilelektroden mit einer Isolierschicht 75 mit niedriger DK abgedeckt, die für jede der angeschlossenen Teilelektroden einen frei gelassenen Kontaktbereich aufweist. Auf diese Isolierschicht 75 ist ein Widerstandsstreifen 81 aufgetragen, der durch diese frei gelassenen Kontaktbereiche hindurch mit der jeweiligen Teilelektroden elektrisch verbunden ist. Diese so kontaktierten Streifenteile bilden die Teilwiderstände R1, R2 und R3 (Fig. 4d), die die Teilelektroden 73.1, 73.2, 73.3 und 73.4 in Art einer Reihenschaltung überbrücken. Sowohl der Masseableiter 79 als auch die Widerstände sind hier als hochkant stehende Leiterbahnen dargestellt, wobei es sich von selbst versteht, dass diese auch mit einer Einbettungsmasse geschützt sein können, oder dass diese Leiterbahnen auch als flach-liegende Leiterbahnen ausgebildet sein können. Eine diese Konfiguration schützende Isolierlack-Abdeckung kann vorgesehen sein.

Die Figuren 12 zeigen eine Ausbildung der Kondensatorsäule 70' entsprechend der Darstellung in den Figuren 11, jedoch mit Längsinduktivitäten I1, I2, I3 (s. Fign. 4c, 4d) im Masseleiter 79, die mittels ferritischer Schichten 82.1, 82.2 und 82.3 in bekannter Dickschichttechnik herstellbar ist. Diese Kondensatorsäule 70' ist in Fig. 12 in Aufsicht, in Fig. 12a in einem mittigen Längsschnitt entsprechend der Schnittlinie A-A, Fig. 12, in Fig. 12b in einem Längsschnitt entsprechend der Schnittlinie B-B, Fig, 12, in Fig. 12c in einem Längsschnitt so, dass die ferritischen Beläge erkennbar sind, entsprechend der Schnittlinie C-C, Fig. 12, in Fig. 12d im Querschnitt, entsprechend der Schnittlinie D-D, Fig. 12. sowie in Fig. 12e im Querschnitt gemäß Schnittlinie E-E, Fig.12 dargestellt. Der Masseableiter 79 ist zwischen den Anschlüssen der Masse-Verbindungsleiter 77 beidseits jeweils mit einer ferritischen Schichte 82.1, 82.2 oder 82.3 versehen. Infolge dieser ferritischen Schichten erhält der entsprechende Abschnitt des Masseleiters 79 die Eigenschaft einer Längsinduktivität. Diese Längsinduktivitäten I1, I2 und I3 (Fig. 4d), wiederum mit Induktivitätswerte im Bereich von 1 bis 10 µH, stellen in Verbindung mit den Kapazitäten der Teilkondensatoren C1, C2, C3 und C4 in Reihe geschaltete Pi-Filter dar, die die Filtereigenschaften des Gesamtfilters bestimmen; wobei weiter in gleicher Weise gebildete Längsinduktivitäten im Ein- und im Ausgang des Filters vorgesehen sein können (s. Fign. 10), und wobei die Anzahl der Teil-Elektroden nicht auf 4 und die der Teilwiderstände nicht auf 3 beschränkt sind.

Es versteht sich von selbst, dass die hier als hochstehende Leisten dargestellten Leiter - der Masseableiter 69 bzw. 79 oder die Widerstandsleiter 71 - wie in Figur 11b oder 12d mit dem Bezugszeichen 65' gestrichelt angedeutet, in eine den Block abschließende Vergussmasse eingebettet sein können.

## Patentansprüche

1. Mehrfachfilter, insbesondere für vielpolige Steckverbinder, mit in einem quaderförmigen Block aus isolierendem Material angeordneten, der Anzahl der Signalleitungen entsprechenden Anzahl von Durchführungen, von denen zumindest einigen mindestens ein Kondensator mit einer Signal- und einer Masseelektrode sowie einer dielektrischen Schicht zwischen beiden zugeordnet ist, wobei jede Signalelektrode mit der zugeordneten Signalleitung und jede Masseelektrode mit dem über eine nach außen geführte Metallschicht mit Masse verbindbaren Masseleiter elektrisch verbunden sind, dadurch gekennzeichnet, dass das Isoliermaterial des Blockes (10) des Mehrfachfilters das Dielektrikum (14, 24, 34, 44, 54, 64, 74) der Kondensatoren mit einer DK in einer Größenordnung von 10³ bis 10⁴ bildet und jeder der Kondensatoren als Kondensatorsäule (11, 21, 31, 41, 51, 61, 71) ausgebildet, im Block (10, 20) angeordnet und von diesem umschlossen ist, wobei jede der Kondensatorsäulen (11, 21, 31, 41, 51, 61, 71) einen Zentralkanal (11.1, 121.1, 31.1, 41.1, 51.1, 61.1, 71.1)) als Durchführung für die zugeordnete Signalleitung (18, 28, 38, 48, 58 68, 78), wobei diese Signalelektrode die Signalelektrode (12, 22, 32, 42, 52, 62, 72) bildet oder mit einer diese Signalelektrode bildenden metallischen Beschichtung verbunden ist, und wobei jede dieser Kondensatorsäulen eine Masseelektrode (13, 23, 33, 43, 53, 63, 73) im Bereich ihrer Außenwandung aufweist, die als Metallschichten diese Wandung zumindest teilweise überdecken und die über einen quer zu den Zentralkanälen (11.1, 21.1, 31.1, 41.1, 51.1, 61.1, 71.1) verlaufende Masseleiter oder Masseableiter, 29, 39, 49, 59, 69, 79) nach außen geführt, mit Masse verbindbar ist, verbunden sind.

2. Mehrfachfilter, insbesondere für vielpolige Steckverbinder, mit in einem quaderförmigen Block aus isolierendem Material angeordneten, der Anzahl der Signalleitungen entsprechenden Anzahl von Durchführungen, von denen zumindest einigen mindestens ein Kondensator mit einer Signal- und einer Masseelektrode sowie einer dielektrischen Schicht zwischen beiden zugeordnet ist, wobei jede Signalelektrode mit der zugeordneten Signalleitung und jede Masseelektrode mit dem über eine nach außen geführte Metallschicht mit Masse verbindbaren Masseleiter elektrisch verbunden sind, dadurch gekennzeichnet, dass das Isoliermaterial des Blockes (10) des Mehrfachfilters das Dielektrikum der Kondensatoren mit einer DK in einer Größenordnung von 10³ bis 10⁴ bildet und jede der Kondensatorsäulen als zumindest durch Quernuten (20.4; 30.4; 40.4; 50.4; 60.4; 70.4) und bei mehrreihigen Mehrfachfiltern (20; 30; 40; 50; 60; 70) auf durch Längsnuten (20.3; 30.3; 40.3; 50.3; 60.3; 70.3) inselartig getrennt, mit den Füßen auf der Basis des Blockes (20.1; 30.1; 40.1; 50.1; 60.1; 70.1) aufstehende Kondensatorsäulen (21; 31; 41; 51; 61; 71) ausgebildet ist, wobei jede dieser Kondensatorsäulen einen Zentralkanal (21.1; 31.1; 41.1; 51.1; 61.1; 71.1) ) als Durchführung für die zugeordnete Signalleiter (28; 38; 38; 48; 58; 68; 78) und jeder Kondensator eine Signalelektrode (22; 32; 42; 52; 62; 72) im Bereich der Innenwandung jedes der Zentralkanäle und eine Masseelektrode (23; 33; 43; 53; 63; 73) im Bereich der Außenwandung jeder dieser Kondensatorsäulen aufweist, die als Metallschichten diese zumindest teilweise überdecken, und wobei der Signalleiter (28; 38; 38; 48; 58; 68; 78) die Signalelektrode (22; 32; 42; 52; 62; 72) bildet oder mit einer diese Signalelektrode bildenden metallischen Beschichtung verbunden ist, und die Masseelektrode (23) über eine quer quer zu den Zentralkanälen (11.1, 21.1, 31.1, 41.1, 51.1, 61.1, 71.1) verlaufende Masseleiter oder Masseableiter, (19; 29. 39, 49, 59, 69, 79) nach außen geführt, mit Masse verbindbar ist, verbunden sind.

3. Mehrfachfilter nach Anspruch 1 oder 2, dadurch gekennzeichnet, dass die die Masseelektroden (13; 23; 33; 43; 53; 63; 73) bildenden Metallisierungen die Kondensatorsäulen (11; 21; 31, 41, 51, 61; 71) rohrartig umgeben, wobei vorzugsweise zumindest in einigen der Nuten mit Masse verbundene, abschirmende Metallstreifen eingebracht sind.

4. Mehrfachfilter nach Anspruch 2 oder 3, dadurch gekennzeichnet, dass Masseleiter oder Masseableiter (19; 29; 39; 49; 59; 69; 79) im Grund der Nuten (20.3, 20.4; 30,3, 30,4; 40.3, 40.4; 50.3, 50.4; 60.3, 60.4; 70.3, 70.4) angeordnet sind.

5. Mehrfachfilter nach einem der Ansprüche 1 bis 4, dadurch gekennzeichnet, dass bei zumindest einer der Kondensatorsäulen 21; 31; 41; 51; 61; 71) der Signalleiter (18; 28; 38; 48; 58; 68; 78) oder der Masseleiter (19; 29; 39; 49; 59; 69; 79) von der Signalelektrode (12; 22; 32; 42; 52; 62; 72) bzw. der Masseelektrode (13; 23; 33; 43; 53; 63; 73) und somit von dem Dielektrikum (14; 24; 34; 44; 54; 64; 74) mit hoher DK im Abstand angeordnet und in mindestens zwei in Richtung der Signalfortpflanzung getrennte Teilelektroden (22.1, 22.2, 22.3, 22.4; ... 72.1, 72.1, 72.3, 72.4) bzw. (13.3, 13.2, 13.3, 13.4 ... 73.1, 73.2, 73.3, 73.4) unterteilt ist, von denen jede über mindestens eine Signal -Verbindungsleiter (16; 26; 36; 46; 56; 66; 76) bzw. Masse-Verbindungsleiter (mit dem Signalleiter ((17; 27; 37; 47; 57; 67; 77) mit dem Signalleiter 18; 28; 38; 48; 58; 68; 78) bzw. dem Masseleiter oder Masseableiter (19; 29; 39; 49; 59; 69; 79) elektrisch verbunden ist, so dass jeder der Kondensatoren aus Teilkondensatoren (C1, C2, C3, C4) gebildet ist, die aus einer durchgehenden Elektrode und einer unterteilten Elektrode bestehen und jede der Teilelektroden über den zugeordneten Verbindungsleiter mit dem zugeordneten Signalleiter bzw. Masseleiter oder Masseableiter verbunden ist, wobei vorzugsweise jeder der Verbindungsleiter (16; 26; 36; 46; 56; 66; 76; 17; 27; 37; 47; 57; 67; 77) vorzugsweise im wesentlichen punktförmig an den zugeordneten Signal- bzw. Masseleiter bzw. einen Sammelleiter angeschlossen ist, wobei im Bereich des Abstands ein Dielektrikum niedriger DK im Bereich von 10⁰ bis 10¹ vorgesehen ist.

6. Mehrfachfilter nach Anspruch 5, dadurch gekennzeichnet, dass der Masseleiter (69; 79) als parallel zum Zentralkanal (11.1; 21.1; 31.1; 41.1; 51.1; 61.1; 71.1) verlaufender metallisierter Streifen im Abstand vom Dielektrikum hoher DK im Bereich von 10⁰ bis 10¹ angeordnet ist, wobei vorzugsweise eine Schicht eines Dielektrikum niedriger DK im Bereich von 10⁰ bis 10¹ als Abstandshalter vorgesehen ist

7. Mehrfachfilter nach Anspruch 5 oder 6, dadurch gekennzeichnet, dass die gegeneinander isolierten Teilelektroden von Signalelektrode oder von Masseelektrode über elektronische Bauelemente in Art einer Reihenschaltung verbunden sind.

8. Mehrfachfilter nach Anspruch 7, dadurch gekennzeichnet, dass als elektronische Bauelemente Widerstandselemente, vorzugsweise ohm'sche Widerstandselemente vorgesehen sind, deren Widerstandswerte der Widerstandselemente im Bereich des Wellenwiderstands von mit dem Material hoher DK (64; 74) der Kondensatoren in Wechselwirkung stehenden Signal- bzw. Masseleiter liegen.

9. Mehrfachfilter nach Anspruch 6, 7 oder 8, dadurch gekennzeichnet, dass als zwei benachbarte Teilelektroden (2.1, 2.2; 2.2, 2.3; 2.3. 2.4; 3.1, 3.2; 3.2, 3.3; 3.3, 3.4) verbindende Widerstände aufgelötete SMD-Bauelemente oder aufgebrachte Streifen aus Widerstandspaste oder als in Planartechnik aufgedruckte Widerstandsstreifen vorgesehen sind, die diese Leiterbereiche in Art einer Reihenschaltung elektrisch über die Widerstände miteinander verbinden.

10. Mehrfachfilter nach einem der Ansprüche 1 bis 9, dadurch gekennzeichnet, dass Signalleiter (7) oder Masseleiter (9) bzw. Masseableiter mit mindestens einer Induktivität beschaltet ist, wobei vorzugsweise je eine Induktivität zwischen den Anschluss-Stellen der Verbindungsleiter (25; 26) zweier aufeinander folgender Teilelektroden (12.1, 12.2, 12.3, 12.4; 22.1, 22.2, 22.3, 22.4) bzw. (13.1, 13.2, 13.3, 13.4; 23.1, 23.2, 23.3, 23.4) vorgesehen ist, wobei als Induktivitäten an dem Signal- oder den Masseleiter bzw. Masseableiter (18; 28; 38; 48; 58; 68; 78; 19; 29; 39; 49; 59; 69) SMD-Spulen, Ferrit-Perlen oder Ferritschichten (82.1; 82.2; 82.3) vorgesehen sind, die an bzw. auf diesem angeordnet sind, und deren Induktivität im Bereich von 1 bis 10 µH liegt.

11. Mehrfachfilter nach einem der Ansprüche 1 bis 10, gekennzeichnet durch einen Aufbau in Art eines Planarfilters, wobei die Metallschichten der Signal- oder der Masseleiter (18; 28; 38; 48; 58; 68; 78; 19; 29; 39; 49; 59; 69; 79) und der Teil-Kondensatorelektroden (12.1, 12.2, 12,3, 12.4, - 71.1, 71.2. 71.3, 71.5; 13.1, 13.2,k 13.3, 13.4. ---73.1, 73.2, 73.3, 73.4) die dielektrische Schichten (14; 24; 34; 44; 54; 64; 74; 15; 25; 35; 45; 55; 65; 75), die Widerstandsschichten (81) und/oder Ferritschichten (82.1, 82.2, 82.3) mittels Siebdruckverfahren aufgetragen sind, und wobei der Masseleiter (19; 29; 39; 49; 59; 69; 79) in einem Material niedriger DK (15; 25; 35; 45; 55; 65, 75) im Abstand von dem Material hoher DK angeordnet ist

12. Mehrfachfilter nach einem der vorgehenden Ansprüche 1 bis 11, dadurch gekennzeichnet, dass die Kondensatorsäulen (22) einfach, zweifach, drei- oder mehrfach zu Steckverbindereinsätzen (20; 20') zusammengefasst in einer Reihe angeordnet sind, jede mit einem Zentralkanal (23) zum Durchführen des zugeordneten Signalleiters, mit einer Basis (21) einfach, doppelt, drei- oder mehrfach, den zu filternden Anschlüssen entsprechend, wobei als Masseleiter (29) ein metallischer Belag auf zumindest einer Außenwandung der Kondensatorsäule (22) vorgesehen ist.

13. Verwendung des Mehrfachfilter nach einem der Ansprüche 1 bis 12 als Filterstecker, dadurch gekennzeichnet, dass das der Block des Mehrfachfilters so ausgeformt ist, dass es mit einer äußerer Metallisierung versehen den Filterstecker mit Gehäuse bildet.

14. Verfahren zur Herstellung eines Mehrfachfilters nach einem der Ansprüche 1 bis 11, dadurch gekennzeichnet, dass die Signal -Teilelektroden (12.1, 12.2, 12.3, 12.4, --- 72.1, 72.2, 72.3, 73.4) bzw. die Masse-Teilelektroden (13.1, 13.2, 13.3, 13.4, --- 73.1, 73.2, 73.3, 73.4) mit einer Metallisierungspaste streifenförmig auf die Außenfläche der Kondensatorsäulen vorzugsweise im Siebdruckverfahren aufgetragen und eingebrannt sind, dass über diese Masseelektroden eine weitere Lage eines isolierenden Dielektrikums mit niedriger Dielektrizitätskonstanten im Bereich von 10⁰ bis 10¹ aufgetragen wird, die jedoch mittig Durchlässe aufweisen, durch die die Verbindungsleiter zwischen den Teilelektroden und dem Signalleiter (68; 78) bzw. dem Masseleiter oder Masseableiter (69; 79)geführt werden.

15. Verfahren nach Anspruch 14, dadurch gekennzeichnet, dass die aufgetragene isolierende dielektrische Schicht mit niedriger DK im Bereich zumindest zweier aufeinander folgender Teilelektroden, vorzugsweise im Bereich jeder der Teilelektroden je einen weiteren Durchlass aufweist, und dass auf diese isolierende dielektrische Schicht diese Durchlässe verbindende Widerstandsstreifen aufgetragen werden.

16. Verfahren nach Anspruch 14 oder 15, dadurch gekennzeichnet, dass die Streifen des Masseleiters und/oder die Widerstandsstreifen als hochkant stehende Metallstreifen aufgebracht sind, und dass die durch die Durchlässe greifende elektrische Verbindung mit den Teilelektroden durch in diese Durchlässe gebrachte Lötpaste mit nachfolgendem Verlöten hergestellt wird.

17. Verfahren nach Anspruch 14, 15 oder 16, dadurch gekennzeichnet, dass der Signal- oder der Masseleiter zwischen den Anschluss-Stellen der Verbindungsleiter mit ferritischen Überfängen ver-sehen wird, vorzugsweise gebildet von ferritischen Pasten, die auf den Signal- bzw. Masseleiter aufgetragen werden, vorzugsweise im Siebdruckverfahren.
